# EUROPEAN PATENT SPECIFICATION

(11) **EP 2 673 324 B1**
(45) Date of publication and mention of the grant of the patent: **29.07.2015**
(21) Application number: 12744922.1
(22) Date of filing: 31.01.2012
(51) Int. Cl.: B41M 5/00, C09D 11/40, C09D 11/52, C08G 65/00, C09D 163/00, C08G 59/40

(54) **INK SET, CARTRIDGE, INKJET RECORDING METHOD, AND INKJET RECORDING DEVICE**
TINTENSATZ, TINTENPATRONE, TINTENSTRAHLAUFZEICHNUNGSVERFAHREN UND TINTENSTRAHLAUFZEICHNUNGSVORRICHTUNG
ENSEMBLE D'ENCRES, CARTOUCHE, PROCÉDÉ D'IMPRESSION PAR JET D'ENCRE ET DISPOSITIF D'IMPRESSION PAR JET D'ENCRE

(30) Priority: 07.02.2011 JP 2011024454
(43) Date of publication of application: 18.12.2013
(73) Proprietor: Ricoh Company, Limited, Tokyo 143-8555 (JP)
(72) Inventor: KATSURAGI, Koji, Ebina-shi, Kanagawa, 243-0460 (JP)
(74) Representative: Lamb, Martin John Carstairs
(86) International application number: PCT/JP2012/052579
(87) International publication number: WO 2012/108368

(56) References cited:
- JP-A- 9 272 826
- JP-A- 9 286 940
- JP-A- 9 286 944
- JP-A- 10 046 077
- JP-A- 11 010 856
- JP-A- 53 115 306
- JP-A- 2002 137 376
- JP-A- 2003 012 977
- JP-A- 2003 313 468
- JP-A- 2010 052 262
- JP-A- 2010 188 661
- JP-A- 2010 194 998
- JP-A- 2010 275 377
- JP-A- 2011 012 109

## Description

### Technical Field

The present invention relates to an ink set containing a treatment liquid and an ink, to a cartridge filled with the treatment liquid and the ink constituting the ink set, and to an inkjet recording method and inkjet recording device using the ink set.

### Background Art

It has been known that inkjet recording is performed using a treatment liquid containing acid and an ink containing a colorant encapsulated in a carboxyl group-containing resin. Although this method makes it possible to form images of high density and high quality, the aggregated pigment particles cannot be fixed. During high-speed conveyance, such as in a line-engine system, therefore, transfer smears to conveying roller or the like often happen.

PTL 1 discloses a recording method where printing is performed by depositing an ink composition and a reaction liquid on a recording medium. In this method, the ink composition contains a colorant and resin emulsion particles, and the reaction liquid contains a reactant for initiating aggregation in contact with the ink composition, cationic inorganic particles and/or cationic polymer particles. The cationic polymer disclosed here includes an acrylic resin or an epoxy resin, but a sufficient effect (improving the abrasion resistance after printing) cannot be attained by merely adding the resin. Moreover, the reactant for aggregating the ink composition is added in the reaction liquid, and causes aggregation of the pigment on the surface of the recording medium. Therefore, this method is disadvantageous especially in terms of the abrasion resistance after printing.

### Citation List - Patent Literature

PTL 1: Japanese Patent Application Laid-Open (JP-A) No. 2002-225414.

Reference is also made to US 6039796, which discloses an ink set according to the preamble of Claim 1, US5948512, US 2010/055325, JP 2010-194998 and JP 2010-188661.

### Summary of Invention

### Technical Problem

The present invention aims to provide an ink set containing a treatment liquid and an ink, which can improve both high image quality and abrasion resistance (fixing ability), a cartridge housing the treatment liquid and the ink constituting the ink set, and an inkjet recording method and inkjet recording device using the ink set.

### Solution to Problem

The means for solving the aforementioned problem is as follow. Specifically, the ink set of the present invention contains: a treatment liquid containing at least an organic acid, a surfactant and water; an ink containing at least a colorant, a water-soluble organic solvent, a carboxyl group-containing resin, a surfactant, and water, wherein the treatment liquid, or both the treatment liquid and the ink further contain an epoxy resin.

### Advantageous Effects of Invention

The present invention provides an ink set containing a treatment liquid and an ink, which can improve both high image quality and abrasion resistance (fixing ability) in the inkjet recording using the treatment liquid and the ink, a cartridge housing the treatment liquid and the ink constituting the ink set, and an inkjet recording method and inkjet recording device using the ink set.

In the present invention, by inducing a crosslink reaction between the epoxy resin and the organic acid, and a reaction between the organic acid and the carboxyl group-containing resin in a complex manner, both high image quality and fixing ability can be achieved. Furthermore, by adding a water-soluble oxazoline polymer containing an oxazoline group in a side chain thereof to the treatment liquid, the fixing ability is further improved.

### Brief Description of Drawings

FIG. 1 is a schematic diagram illustrating one example of an inkjet recording device to which the treatment liquid of the invention can be employed.
FIG. 2 is a schematic block diagram explaining the outline of a control section of the inkjet recording device illustrated in FIG. 1.
FIG. 3 is a schematic diagram illustrating one example of a heat array in a head unit of an inkjet recording device.
FIG. 4 is a schematic diagram illustrating an enlarged heads aligned in the heat unit of FIG. 3.
FIG. 5 is a diagram illustrating one example of an ink cartridge including a casing (package).
FIG. 6 is a diagram illustrating an ejection system from an ejection head.
FIG. 7 is a diagram illustrating a coating system by a three rollers.
FIG. 8 is a diagram illustrating a coating system by a two rollers.

### Description of Embodiments

### (Ink Set)

The ink set of the present invention contains a treatment liquid, and an ink, in which at least the treatment liquid or both the treatment liquid the ink contains an epoxy resin.

### <Treatment liquid>

The treatment liquid for use in the present invention is applied to a recording medium prior to ejection of an ink, and contains at least an organic acid, a surfactant, and water, and may further contain other components, if necessary.

### -Organic Acid-

The organic acid mentioned above is preferably selected from those having a carboxyl group in the molecular structure thereof. Many of organic acids are produced inside the body, or contained in foods, and have a low tendency to be remained in human bodies and no odor. Therefore, use of the organic acid is desirable for inkjet recording devices used home or in offices.

Specific examples of the organic acid include succinic acid, citric acid, malic acid, tartaric acid, lactic acid, and salts thereof. Among them, lactic acid, and ammonium lactate are particularly preferable.

The functions the organic acid plays in the present invention include the following two: a crosslink reaction with an epoxy resin contained in the treatment liquid or a crosslink reaction with the epoxy resin and an oxazoline group-containing polymer; and a reaction with a carboxyl group-containing resin in the ink to cause aggregations of the pigment particles on a recording medium.

An amount of the organic acid is preferably 20% by mass or smaller, more preferably 10% by mass or smaller relative to the total amount of the treatment liquid. As described above, the organic acid has two functions. If all of the organic acid is consumed in a crosslink reaction that happens first, the following reaction with the carboxyl group-containing resin may not be happen, which will be a problem. On the other hand, when the amount of the organic acid is large, the effect of aggregating the pigment particles due to the reaction with the carboxyl-containing resin in the ink increases, and as a result, a dot diameter becomes small on a recording medium, which specifically means a spread of a dot formed by the ink being small. If the spreading of the dot causes insufficient filling especially in a solid imaging part, there is a problem that a base color of a recording medium affects a resulting image. Accordingly, it is desirable to adjust the amount of the organic acid to a range where no problem will occur in a resulting image.

The pH of the treatment liquid containing the organic acid is around 4, which is an acidic side. When the treatment liquid of this pH is used, a metal member is corroded, and may cause various problems over a long period of use. Accordingly, a pH regulator is added to the treatment liquid depending on the situation. As for the pH regulator,
2-amino-2-methyl-1,3-propanediol and
2-amino-2-ethyl-1,3-propanediol are preferable. An amount of the pH regulator to be added varies depending on the pH of the organic acid, but the amount thereof is appropriately adjusted so that the pH of the treatment liquid falls into the range of 9 to 11.

### -Epoxy Resin-

The epoxy resin is added for improving the abrasion resistance. The epoxy resin is preferably water soluble.

An amount of the epoxy resin to be added is preferably 5% by mass or smaller relative to the total amount of the treatment liquid, and is preferably 1% by mass or smaller relative to the total amount of the ink. The epoxy resin functions to improve the abrasion resistance by a crosslink reaction with the organic acid or oxazoline group-containing polymer. A reaction speed of the crosslink reaction mentioned here is not fast enough to say it dries immediately. Accordingly, when the epoxy resin is added in an excessive amount, the excessive amount of the epoxy resin is remained on the recording medium, which impairs the abrasion resistance. Therefore, the amount of the epoxy resin added to the treatment liquid preferably falls in the aforementioned range.

The epoxy resin is readily available as a commercial product, and examples thereof include: ADEKA RESIN EPU series, and ADEKA RESIN EPR series both manufactured by ADEKA CORPORATION; and Polyepoxy Type manufactured by Sakamoto Yakuhin Kogyo Co., Ltd.

A method or manner for mixing the organic acid and the epoxy resin varies depending on a coating system or storage system of the treatment liquid. The organic acid and the epoxy resin may be mixed in advance to then prepare a treatment liquid. Alternatively, the organic acid and the epoxy resin may be each separately prepared, and ejected to be applied on a recording medium, to thereby be mixed to each other on the recording medium.

As for the epoxy resin, the compounds represented by the following structural formulae 1 to 4 are preferable.

Examples of commercial products thereof include SR-GLG (structural formula 1), SR-4GL (structural formula 2), SR-SEP (structural formula 3), and SY-GTA80 (structural formula 4), all manufactured by Sakamoto Yakuhin Kogyo Co., Ltd.

Each product of the structural formula 1 to structural formula 3 is a mixture of a compound in which R is H and a compound in which R is an epoxy group-containing substituent represented by the structural formula. Note that, in the structural formula 3, there is no case where all of R are H. Moreover, each product of the structural formulae 2 and 3 is a mixture of compounds where n is 2 to 10.

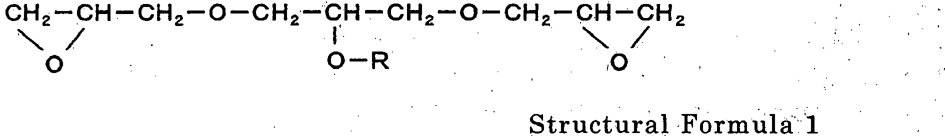

In the structural formula 1, R is a hydrogen atom, or the group represented by the following formula:

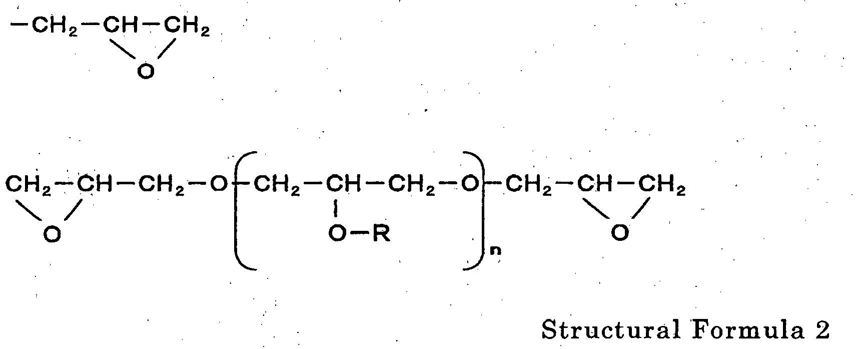

In the structural formula 2, R is a hydrogen atom, or the group represented by the following formula; and n denotes an integer of 2 to 10.

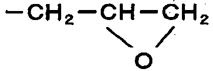

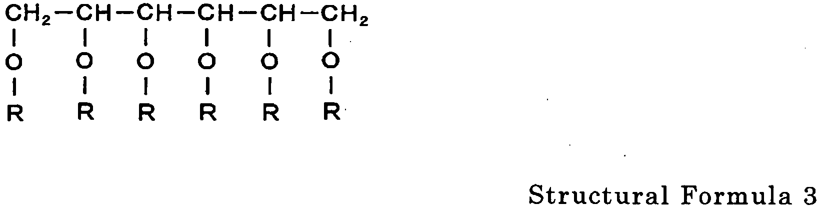

In the structural formula 3, R denotes a hydrogen atom or the group represented by the following formula, provided that not all of R are hydrogen atoms; and and n denotes an integer of 2 to 10.

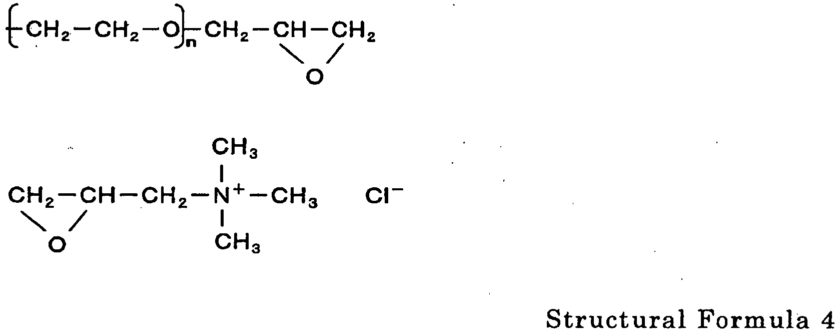

### -Surfactant-

The treatment liquid contains a surfactant for reducing a surface tension. One of the properties of the treatment liquid of the present invention is appropriate wet ability to various recording media, as well as an ability to be ejected or applied without unevenness. By giving an appropriate wet ability, a penetration speed of the ink to various recording media can be improved, and as a result, problems such as poor abrasion resistance and bleeding can be improved. Especially, the penetration properties of the treatment liquid to various recording media are important. When the penetration properties of the treatment liquid are low, a large amount of the treatment liquid is remained around the surface of the recording medium, which causes an excessive aggregation reaction of the carboxyl group-containing resin encapsulating the colorant with the organic acid in the treatment liquid as the ink containing the colorant is in contact with the treatment liquid on the recording medium. As a result, dot diameters reduce, which forms a solid image in which the imaging part is not sufficiently filled. As a result that the excessive amount of the colorant component is remained on the surface of the recording medium, moreover, a problem such as abrasion resistance also occurs. From these reasons, it is a common practice to add a surfactant to reduce the surface tension for the purpose of improving wet ability. Among the surfactants, the surfactant containing a fluoroalkyl group is preferable, because the surfactant containing a fluoroalkyl group particularly has an ability to significantly reduce the surface tension as it is made water-soluble. The particularly preferable surfactant is the fluorosurfactant represented by the following structural formula.

C₄F₉-CH₂CH(OH)CH₂O-(CH₂CH₂O)₂₃-CH₂CH(OH)CH₂-C₄F₉

Note that, since the fluorosurfactant of the structure above does not contain perfluorooctane sulfonate (PFOS) or perfluoro-octanoate (PFOA), the fluorosurfactant of the structure above is preferably in view of environmental friendliness.

The fluorosurfactant of the structure above has, however, a very high surface activating ability. When it is used, therefore foams remains even by adding a commonly used silicone-based defoaming agent, which may cause uneven coating as it is coated with a roller, and may cause ejection failure as it is ejected from an ejection head. Accordingly, it is preferred that a deforming agent such as N-octyl-2-pyrrolidone, 2,4,7,9-tetramethyldecane-4,7-diol, and 2,5,8,11-tetramethyldodecane-5,8-diol be added for suppressing the generation of foam. By using the defoaming agent and the fluorosurfactant in combination, foaming can be prevented, and the problems occurred due to the foaming can be solved.

The surface tension of the treatment liquid is determined depending on a proportion of the deforming agent for use. In the case where the surface tension of the treatment liquid needs to be reduced depending on a recording medium for use, a proportion of the fluorosurfactant for use is increased. When the proportion of the fluorosurfactant increases, there is naturally a problem of bubbling. Accordingly, the proportion of the fluorosurfactant is preferably 40% by mass or smaller, more preferably 30% by mass or smaller in the total amount of the fluorosurfactant and the defoaming agent.

The total amount of the fluorosurfactant and the defoaming agent is preferably 2% by mass or smaller, more preferably 1% by mass or smaller relative to the total amount of the treatment liquid.

### -Solvent (Water-Soluble Organic Solvent)-

As a solvent of the treatment liquid, water is used, but a water-soluble organic solvent may be added to the water. Examples of the water-soluble organic solvent include polyhydric alcohols, polyhydric alcohol alkyl ethers, polyhydric alcohol aryl ethers, a nitrogen-containing compound, amides, amines, a sulfur-containing compound, propylene carbonate, and ethylene carbonate.

Examples of the polyhydric alcohols include glycerin, 1,3-butanediol, 3-methyl-1,3-butanediol, 1,5-pentanediol, 1,6-hexanediol, ethyleneglycol, diethyleneglycol, triethyleneglycol, tetraethyleneglycol, polyethyleneglycol, propylene glycol, dipropylene glycol, tripropylene glycol, polypropylene glycol, hexylene glycol, glycerol, trimethylol ethane, trimethylol propane, 1,2,3-butanetriol, 1,2,4-butanetriol, 1,2,6-hexanetriol, and methylpentanetriol.

Examples of the polyhydric alcohol alkyl ethers include ethyleneglycol monoethyl ether, ethyleneglycol monobutyl ether, diethyleneglycol monomethyl ether, diethyleneglycol monoethyl ether, diethyleneglycol monobutyl ether, tetraethyleneglycol monmethyl ether, and propylene glycol monoethyl ether.

Examples of the polyhydric alcohol aryl ethers include ethyleneglycol monophenyl ether, and ethyleneglycol monobenzyl ether.

Examples of the amines include monoethanol amine, diethanol amine, triethanol amine, monoethylamine, diethylamine, and triethylamine.

Examples of the sulfur-containing compound include dimethyl sulfoxide, sulfolane, and thiodiethanol.

Among these water-soluble solvents, glycerin, diethyleneglycol, 1,3-butanediol, and 3-methyl-1,3-butanediol are particularly preferable. These water-soluble solvents exhibit excellent effects on solubility, and prevention of jet failure caused by evaporation of the moisture in the ink. Moreover, use of these water-soluble solvents can realize a formation of a treatment liquid having excellent storage stability and ejection stability.

### -Oxazoline Group-Containing Polymer-

The treatment liquid may contain an oxazoline group-containing polymer for the purpose of further improving the abrasion resistance. By using the polymer containing an oxazoline group, which is a crosslinkable component, in a side chain therein, the oxazoline group-containing polymer reacts with the organic acid to precede the crosslinking reaction with other molecules to thereby finally form a network structure. Therefore, the colorant is trapped by the network structure, which improves fixing ability. Examples of the reactant containing an oxazoline group include an oxazoline-group containing resin, and particles on each surface of which an oxazoline group is adsorbed. The oxazoline group-containing resin can be readily available as commercial products, and examples thereof include K-2000 series acryl-styrene resins, WS series acrylic resins, RPS series styrene resins, and RAS series acrylonitrile-styrene resin; all available from Nippon Shokubai Co., Ltd. Moreover, the particles on each surface of which the oxazoline group has been adsorbed can be available as commercial products, and may be organic particles or inorganic particles.

Examples of the organic particles containing an oxazoline group include: ME series manufactured by Soken Chemical & Engineering Co., Ltd., JURYMER MB series manufactured by Nippon Junyaku Co., Ltd., TOSPEARL series manufactured by Momentive Performance Materials Inc., Microgel series manufactured by Nippon Paint Co., Ltd., and Fluon series manufactured by ASAHI GLASS CO., LTD. Examples of the inorganic particles containing an oxazoline group include:
titania series manufactured by Idemitsu Kosan Co., Ltd., and
aluminum oxide C manufactured by Nippon Aerosil Co., Ltd.

### -Other components-

The treatment liquid may further contain, other than the components mentioned above, a pH regulator, a preservative and fungicide, an anti-rust, etc., if necessary.

### <Ink>

The ink contains at least a colorant, a water-soluble organic solvent, a carboxyl group-containing resin, a surfactant ) and water, and may further contain other components, if necessary.

### -Colorant-

As for the colorant, dyes or pigments known in the art for use in the ink can be used. Moreover, colorant particles in which inorganic particles are coated with an organic pigment or carbon black may be used as the colorant.

A method for coating the inorganic particles with carbon black include a method of drying in liquid by coagulation, precipitation, or the like; and a drying-mixing method in which a mechanical force is applied while mixing. Further examples of the method of coating the inorganic particles with an organic pigment include a method in which an organic pigment is precipitated in the presence of inorganic particles; and a method in which inorganic particles and an organic pigment are mechanically mixed and ground. When inorganic particles are coated with the organic pigment that is excellent in thermal stability, chemical deposition can be used for coating. Moreover, if necessary, an organosilane compound layer formed of polysiloxane or alkyl silane can be provided between each inorganic particle and the organic pigment, so that adhesion between the inorganic particle and the organic pigment can be improved.

Examples of the inorganic particles include titanium dioxide, silica, alumina, iron oxide, iron hydroxide, and tin oxide. Regarding the shape of each inorganic particle, the aspect ratio is preferably smaller. The inorganic particle particularly preferably has a spherical shape. In the case where a colored colorant is adsorbed on the surface of the inorganic particle, the inorganic particle is preferably colorless transparent or white. In the case where a black colorant is adsorbed thereon, black inorganic particles may be used.

The primary particle diameter of the inorganic particles is preferably 100 nm or smaller, more preferably 5 nm to 50 nm.

Examples of the organic pigment for coating the inorganic particles include, as a black pigment, aniline black. Examples thereof, as a color pigment, include phthalocyanine blue, phthalocyanine green, diazo, monoazo, pyranthrone, perylene, heterocyclic yellow, quinacridon and (thio)indigo.

Among them, the phthalocyanine -based pigment, quinacridon-based pigment, monoazo yellow-based pigment, diazo yellow-based pigment, heterocyclic yellow pigment are particularly preferable in view of the coloring abilities.

Examples of the phthalocyanine-based pigment include copper phthalocyanine blue and derivatives thereof (C.I Pigment Blue 15:3, C.I Pigment Blue 15:4), and aluminum phthalocyanine.

Examples of the quinacridon-based pigment include C.I Pigment Orange 48, C.I Pigment Orange 49, C.I Pigment Red 122, C.I Pigment Red 192, C.I Pigment Red 202, C.I Pigment Red 206, C.I Pigment Red 207, C.I Pigment Red 209, C.I Pigment Violet 19, and C.I Pigment Violet 42.

Examples of the monoazo yellow-based pigment include C.I Pigment Yellow 74, C.I Pigment Yellow 109, C.I Pigment Yellow 128, and C.I Pigment Yellow 151.

Examples of the diazo yellow-based pigment include C.I Pigment Yellow 14, C.I Pigment Yellow 16, and C.I Pigment Yellow 17.

Examples of the heterocyclic yellow pigment include C.I Pigment Yellow 117, and C.I Pigment Yellow 138.

The mass ratio (inorganic particles/colorant) of the inorganic particles to the organic pigment or carbon black as the colorant is preferably 3/1 to 1/3, more preferably 3/2 to 1/2. when the proportion of the colorant is too small, coloring properties and/or coloring ability of the coated particles may be decreased. When the proportion of the colorant is too large, the coated particles may be degraded in transparency or color tone.

Examples of commercially available colorant particles in which inorganic particles are each coated with an organic pigment or carbon black include silica/carbon black composite materials, silica/phthalocyanine C.I. Pigment Blue 15:3 composite materials, silica/diazo yellow composite materials, and silica/quinacridone C.I. Pigment Red 122 composite materials, all of which are manufactured by Toda Kogyo Corp. These materials have a small primary particle diameter, and thus are suitably used.

For example, if inorganic pigments having a primary particle diameter of 20 nm are coated with an equiamount of an organic pigment, the coated particles will have a primary diameter of approximately 25 nm. Therefore, provided that these particles are dispersed maintaining the state of primary particles by using an appropriate dispersant, an extremely finely dispersed pigment ink having a dispersed particle diameter of 25 nm can be obtained.

The primary particle diameter of the colorant particles in the ink is preferably 5 nm to 100 nm, more preferably 30 nm to 80 nm. When the primary particle diameter thereof is smaller than 5 nm, the ink may increase its viscosity or the colorant particles may be aggregated to each other over a long period of storage. When the primary particle diameter thereof is larger than 100 nm, a resulting print has low color saturation or brightness in a printed part as the resulting ink is printed on a medium such as paper or a film. Note that, the primary particle diameter of the colorant particles means a minimum unit for the colorant particle that cannot be mechanically pulverized any smaller.

An amount of the colorant particles in the ink is preferably 1% by mass to 20% by mass, more preferably 2% by mass to 15% by mass.

### -Water-Soluble Organic Solvent-

The ink for use of the present invention contains water as a solvent, but contains a water-soluble organic solvent for the purpose of preventing the ink from being dried, and for improving dispersion stability. As for the water-soluble organic solvent, a plurality of solvents may be used in mixture.

As for the water-soluble organic solvent, those used in the aforementioned treatment liquid can be used.

A mixing ratio of the colorant particles and the water-soluble organic solvent largely affects the ejection stability of the ink from a head. When the amount of the water-soluble organic solvent is small relative to the large solids content of the pigment, moisture evaporation around the ink meniscus of the nozzle is accelerated, which may cause ejection failures.

The ink for use in the present invention may contain, other than the aforementioned water-soluble organic solvent, other water-soluble organic solvents (e.g., saccharides) in combination, if necessary. Examples of the saccharides include monosaccharides, disaccharides, oligosaccharides (including trisaccharides, and tetrasaccharides), polysaccharides, and derivatives thereof. Specific examples thereof include glucose, mannose, fructose, ribose, xylose, trahalose, and maltotriose. Here, "polysaccharide" means sugar in a broad sense, and include compounds widely present in the nature, such as α-cyclodextrin, and cellulose.

Moreover, examples of derivatives of these saccharides include reducing sugars, and sugar acids. Among them, sugar alcohol is particularly preferable, and specific examples thereof include maltitol, and sorbitol.

An amount of the saccharides is preferably 0.1% by mass to 40% by mass, more preferably 0.5% by mass to 30% by mass, relative to the amount of the ink.

### -Carboxyl Group-Containing Resin-

Since the ink for use in the present invention contains the carboxyl group-containing resin, the carboxyl group-containing resin contained in the ink reacts with the organic acid contained in the treatment liquid to cause aggregations of the pigment particles on a recording medium, which improves image quality of the resulting print.

Examples of the carboxyl group-containing resin include a maleic resin, a styrene-maleic acid resin, a rosin-modified maleic resin, an alkyd resin, and a modified alkyd resin. These resins may be appropriately synthesized in the same manner as Compolymer A presented below as a synthesis example, or selected from commercial products. Examples of the commercial products thereof include MALKYD series manufactured by Arakawa Chemical Industries, Ltd.; and HARIMAX series and HARIPHTHAL series, both manufactured by Harima Chemicals, Inc.

The manner of adding the carboxyl group-containing resin may be suitably selected without any restriction. It may be added in the state such that a pigment serving as the colorant is encapsulated in (covered with) the carboxyl group-containing resin. Alternatively, it may be added separately from the colorant.

### -Surfactant-

The surfactant added to the ink is appropriately selected depending on the colorant for use, or a combination of a wetting agent and penetrating agent for use without any restriction, provided that it does not adversely affect the dispersion stability of the resulting ink. In the case where the resulting ink is used for printing on printing paper, a fluorosurfactant or silicone surfactant having low surface tension and high leveling property is preferable, and the fluorosurfactant is particularly preferable.

As for the fluorosurfactant, for example, a perfluoroalkyl sulfonic acid compound, a perfluoroalkyl carboxylic acid compound, a perfluoroalkyl phosphate compound, a perfluoroalkyl ethylene oxide adduct, and a polyoxyalkylene ether polymer compound having a perfluoroalkyl ether group in the side chain thereof are particularly preferable, as they have little foamability.

Examples of the perfluoroalkyl sulfonic acid compound include perfluoroalkyl sulfonic acids, and perfluoroalkyl sulfonic acid salts.

Examples of the perfluoroalkyl carboxylic acid compound include perfluoroalkyl carboxylic acids, and perfluoroalkyl carboxylic acid salts.

Examples of the perfluoroalkyl phosphate compound include perfluoroalkyl phosphates and perfluoroalkyl phosphate salts.

Examples of the polyoxyalkylene ether polymer compound having a perfluoroalkyl ether group in the side chain thereof include sulfuric acid ester salts of polyoxyalkylene ether polymer having a perfluoroalkyl ether group in the side chain thereof, and salts of polyoxyalkylene ether polymer having a perfluoroalkyl ether group in the side chain thereof.

Examples of the counter ion in the salts in these fluorosurfactants include Li, Na, K, NH₄, NH₃CH₂CH₂OH, NH₂(CH₂CH₂OH)₂ and NH(CH₂CH₂OH)₃.

As for the fluorosurfactant for use, it may be appropriately synthesized, or selected from commercial products. Examples of the commercial products thereof include: SURFLONS-111, S-112, S-113, S-121, S-131, S-132, S-141, S-145 (all manufactured by AGC SEIMI CHEMICAL CO., LTD); FLOURAD FC-93, FC-95, FC-98, FC-129, FC-135, FC-170C, FC-430, FC-431 (all manufactured by Sumitomo 3M Limited); MEGAFACE F-470, F-1405, F-474 (all manufactured by DIC Corporation); ZONYL TBS, FSP, FSA, FSN-100, FSN, FSO-100, FSO, FS-300, UR (all manufactured by Du Pont Kabushiki Kaisha);FT-110, FT-250, FT-252, FT-400S, FT-150, FT-400SW (all manufactured by NEOS COMPANY LIMITED); and PolyFox PF-151N (manufactured by Omnova Solutions, Inc.). Among them, the fluorosurfactant having the following structure is particularly preferable.

C₄F₉-CH₂CH(OH)CH₂O-(CH₂CH₂O)₂₃-CH₂CH(OH)CH₂-C₄F₈

The silicone-based surfactant is appropriately selected depending on the intended purpose without any restriction. Among the silicone-based surfactants, a silicone-based surfactant that is not decomposed at high pH is preferable, and examples of such a silicone-based surfactant include side chain-modified polydimethylsiloxane, both terminals-modified polydimethylsiloxane, one terminal-modified polydimethylsiloxane, and side chain and both terminals-modified polydimethylsiloxane. The silicone-based surfactant having, as a modified group, a polyoxyethylene group, or a polyoxyethylene polyoxypropylene group is particularly preferable because it has excellent properties as an aqueous surfactant.

The silicone-based surfactant for use may be appropriately synthesized or selected from commercial products. The commercial products thereof can be readily available from BYK Japan K.K., Shin-Etsu Chemical Co., Ltd., Dow Corning Toray Co., Ltd.

As for the silicone-based surfactant, moreover, a polyether-modified silicone-based surfactant may be used. Examples of the polyether-modified silicone-based surfactant include a compound in which a polyalkylene oxide structure is introduced to a side chain from Si of dimethyl polysiloxane.

The polyether-modified silicone-based surfactant for use may be appropriately synthesized or selected from commercial products. Examples of the commercial products thereof include KF-618, KF-642, and KF-643 (all manufactured by Shin-Etsu Chemical Co., Ltd.).

Other than the fluorosurfactant and the silicone-based surfactant, moreover, an anionic surfactant, a nonionic surfactant, and an amphoteric surfactant can be used.

Examples of the anionic surfactant include an acetic acid salt of polyoxyethylene alkylether, dodecylbenzene sulfonic acid salt, succinic ester sulfonic acid salt, lauryl acid salt, and a salt of polyoxyethylene alkyl ether sulfate.

Examples of the nonionic surfactant include an acetylene glycol-based surfactant, polyoxyethylene alkyl ether, polyoxyethylene alkylphenyl ether, polyoxyethylene alkyl ester, and polyoxyethylene sorbitan fatty acid ester.

Examples of the acetylene glycol-based surfactant include 2,4,7,9-tetramethyl-5-decyn-4,7-diol, 3,6-dimethyl-4-octyn-3,6-diol, and 3,5-dimethyl-1-hexyn-3-diol. Moreover, examples of the commercial products thereof include SURFYNOL series (104, 82, 465, 485 and TG) manufactured by Air Products and Chemicals, Inc.

Examples of the amphoteric surfactant include lauryl amino propionic acid salts, lauryl dimethyl betaine, stearyl dimethyl betaine, lauryl dihydroxyethyl betaine, lauryl dimethyl amine oxide, myristyl dimethyl amine oxide, stearyl dimethyl amine oxide, dihydroxyethyl lauryl amine oxide, polyoxyethylene coconut oil alkyldimethyl amine oxide, dimethylalkyl (coconut) betaine and dimethyl lauryl betaine. Moreover, as commercially available products of the amphoteric surfactant, for example, those manufactured by Nikko Chemicals Co., Ltd., Nihon-Emulsion Co., Ltd., Nippon Shokubai Co., Ltd., TOHO Chemical Industry Co., Ltd., Kao Corporation, Adeka Corporation, Lion Corporation, Aoki Oil Industrial Co., Ltd., and Sanyo Chemical Industries, Ltd., can be readily available.

The aforementioned various surfactants may be used individually or in combination. A surfactant, which does not easily dissolve in the aqueous recording ink, may dissolve when it is added to the ink in combination with other surfactants, and can be stably present in the ink.

An amount of the surfactant in the ink is preferably 0.01 to 3% by mass, more preferably 0.5 to 2% by mass. When the total amount of the compounds added as the surfactant is smaller than 0.01% by mass, the effect commensurate with the addition of the surfactant may not be attained. When the amount thereof is larger than 3% by mass, the penetration ability of the ink to recording media may be higher than required, which may cause low image density or strike-through.

Note that, in case where the fluorosurfactant is used, there is a problem of foaming in the same manner as in the case of the treatment liquid. Therefore, a defoaming agent is preferably added to the ink in the same manner as in the treatment liquid.

### -Other Components-

The ink for use in the present invention may further contain, other than the components mentioned above, a conventional penetrating agent, polymer particles, pH regulator, preservative and fungicide, anti-rust, etc., if necessary.

As the penetrating agent, a C8-C11 polyol compound or a glycol ether compound is preferably used. These compounds have an effect of preventing bleeding as well as accelerating penetration speed to paper, and are partially water-soluble compounds having a solublity of 0.1% by mass to 4.5% by mass to water of 25°C.

Examples of the C8-C11 polyol compound include 2-ethyl-1,3-hexanediol, 2,2,4-trimethyl-1,3-pentanediol, and 1,2-octaonediol.

Examples of the glycol ether compound include a polyhydric alcohol alkyl ether compound, and a polyhydric alcohol aryl ether compound.

Examples of the polyhydric alcohol alkyl ether compound include ethyleneglycol monoethyl ether, ethyleneglycol monobutyl ether, diethyleneglycol monomethyl ether, diethyleneglycol monoethyl ether, diethyleneglycol monobutyl ether, tetraethyleneglycol monomethyl ether, and propylene glycol monoethyl ether.

Examples of the polyhydric alcohol aryl ether compound include ethyleneglycol monophenyl ether, and ethyleneglycol monobenzyl ether.

The penetrating agent has a boiling point higher than that of water, and stays as a fluid in an ink of 25°C. An amount of the penetrating agent in the ink is preferably 0% by mass to 10% by mass, more preferably 0.5% by mass to 5% by mass.

As the polymer particles, those capable of forming a film are used. Here, the phrase "capable of forming a film" means that the polymer particles form a resin film when they are dispersed in water to form an emulsion, and then water is evaporated from the emulsion.

Such polymer particles function to firmly fix the colorant contained in the ink onto a recording medium by forming a film after volatile substances contained in the ink are evaporated. As a result, images excellent in abrasion resistance and water resistance can be formed.

In order to make the polymer particles form a film at room temperature, the lowest film forming temperature thereof is preferably 30°C or lower, more preferably 10°C or lower. Here, "the lowest film forming temperature" means the lowest temperature at which a transparent continuous film is formed when polymer emulsion obtained by dispersing the polymer particles in water is thinly applied onto a metal sheet, such as an aluminum sheet, and then the temperature thereof is increased. Specific examples of such polymer particles include Landy PL series (manufactured by MIYOSHI OIL AND FAT CO., LTD.).

The volume average particle diameter of the polymer particles are preferably 5 nm to 200 nm, more preferably 10 nm to 100 nm.

As the polymer particles, particles of a monoparticle structure polymer may be used. For example, if an alkoxysilyl group is contained in an emulsion particle, the alkoxysilyl group is brought into contact with moisture which is left from the fusion of emulsion particles caused by moisture evaporation in the course of coating film formation, and then is hydrolyzed to form a silanol group. If the silanol group remains, the silanol group reacts with an alkoxysilyl group or another silanol group so that a strong crosslinked structure is formed with siloxane bonds. By providing a combination of such reactive functional groups within a polymer particle in this manner, it is possible to form a network structure without using a curing agent by allowing these functional groups to react during film formation.

Moreover, as the polymer particles, polymer particles each having a core-shell structure can be employed. The core-shell structure includes a core and a shell which surrounds the core. The core-shell structure means that two or more polymers each having different formulations are present in each particle in the state of phase separation. Therefore, the core-shell structure includes not only the mode such that a shell completely covers a core, but also the mode such that a shell partially covers a core. Moreover, part of the polymer of the shell may form domains within a core particle. Furthermore, the core-shell structure may be a multilayer structure of three or more layers which further contains one or more layers (which have different formulations) between the core and the shell.

The polymer particles can be obtained by any method known in the art, such as a method in which unsaturated vinyl monomers (unsaturated vinyl polymers) are emulsion polymerized in water in the presence of a polymerization catalyst and an emulsifier.

An amount of the polymer particles in the ink is preferably 0.5% by mass to 20% by mass, more preferably 1% by mass to 5% by mass. When the amount thereof is smaller than 0.5% by mass, abrasion resistance and water resistance may not be sufficiently improved. When the amount thereof is larger than 20% by mass, the ink may not be stably ejected due to its increased viscosity or deposition of the polymer components contained therein due to drying, which may cause nozzle clogging.

The aforementioned colorant particles (composite pigment particles), in which inorganic particles are each coated with an organic pigment or carbon black, are likely to be acidic when they are mixed and dispersed in water together with an anionic dispersant. Since the anionic dispersant surrounds the surface of the composite pigment dispersed in a medium such as water, it is negatively charged. However, the entire ink is acidic, and thus the medium itself is positively charged. Accordingly, the negative charge on the surface of the particle tends to be neutralized. In such a state, the dispersed particles tend to aggregate, which causes jetting failures. Therefore, it is preferred that the ink be maintained alkaline by adding a pH regulator to stabilize the dispersed state and ejection performance.

The pH of the ink is preferably 9 to 11. When the pH of the ink is higher than 11, the ink may dissolve a material of the inkjet head, or of the ink supplying unit, which may cause a modification of the ink, leaking of the ink, or ejection failures.

The pH regulator is preferably added to a kneading dispersion liquid together with a wetting agent, a penetrating agent, or the like, rather than adding during kneading and dispersing the pigment with water together with the dispersant. This is because an addition of the pH regulator may destroy a dispersion state.

Examples of the pH regulator include alcohol amines, alkali metal hydroxides, ammonium hydroxides, phosphonium hydroxides, and alkali metal carbonates.

Examples of the alcohol amines include diethanol amine, triethanol amine, and 2-amino-2-ethyl-1,3-propanediol.

Examples of alkali metal hydroxides include lithium hydroxide, sodium hydroxide, and potassium hydroxide.

Examples of ammonium hydroxides include ammonium hydroxide, and quaternary ammonium hydroxide. Examples of phosphonium hydroxide include quaternary phosphonium hydroxide.

Examples of alkali metal carbonates include lithium carbonate, sodium carbonate, and potassium carbonate.

As the preservative and fungicide, for example, sodium dehydroacetate, sodium sorbate, sodium-2-pyridinethiol-1-oxide, sodium benzoate, and sodium pentachlorophenol are suitably used.

As the anti-rust agent, for example, acidic sulfite salt, sodium thiosulfate, ammonium thiodiglycolate, diisopropyl ammonium nitrite, pentaerythritol tetranitrate, and dicyclohexyl ammonium nitrite are suitably used.

### (Cartridge)

The cartridge charged with the treatment liquid and ink for use in the present invention contains a casing, and the treatment liquid and the ink housed in the casing, and may further contain other members, if necessary.

The casing is not particularly restricted, and a shape, structure, size, and material thereof are appropriately selected depending on the intended purpose. For example, the casing is a plastic casing, or a casing containing an ink bag formed of an aluminum laminate film or the like.

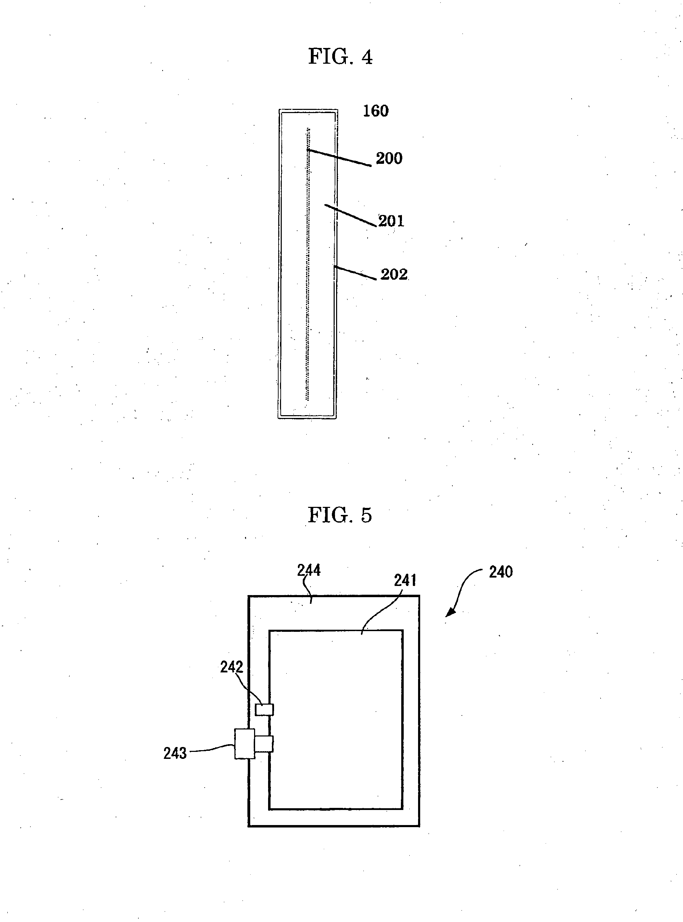

One example of the cartridge including a casing (exterior) of the ink cartridge will be explained with reference to FIG. 5.

As illustrated in FIG. 5, an ink bag 241 is filled with an ink supplied from an ink inlet 242, and the ink inlet 242 is sealed by fusing after releasing the air in the ink bag 241. At the time of use, the ink is supplied to a device by inserting a needle provided in the device into an ink outlet 243 formed of a rubber material. The ink bag 241 is formed of a non air-permeable packaging material, such as an aluminum laminate film. The ink bag 241 is housed in a cartridge case 244 generally formed of a plastic and used as an ink cartridge 240 by detachably mounting it in various inkjet recording devices.

By supplying a treatment liquid to the ink cartridge 240 instead of the ink, it can be used as a cartridge for a treatment liquid. Note that, the casing storing the treatment liquid and the casing storing the ink may be constructed integrated to each other, or constructed as separate items.

### (Inkjet Recording Device and Inkjet Recording Method)

The inkjet recording device of the present invention contains the ink set of the present invention, an image forming unit configured to form an image on a surface of a recording medium by an inkjet system, a storage unit configured to store the treatment liquid, and a pretreatment unit configured to perform a pretreatment on the surface of the recording medium in advance to the image formation by the image forming unit. Moreover, the image forming unit contains at least an inkjet unit, and may further contains other units, such as a stimuli generating unit, and a controlling unit.

The inkjet recording method of the present invention contains: applying the treatment liquid of the ink set of the present invention on a recording medium; ejecting the ink of the ink set of the present invention onto the recording medium, onto which the treatment liquid has been applied, to form an image; and heating, and may further contain other steps, if necessary.

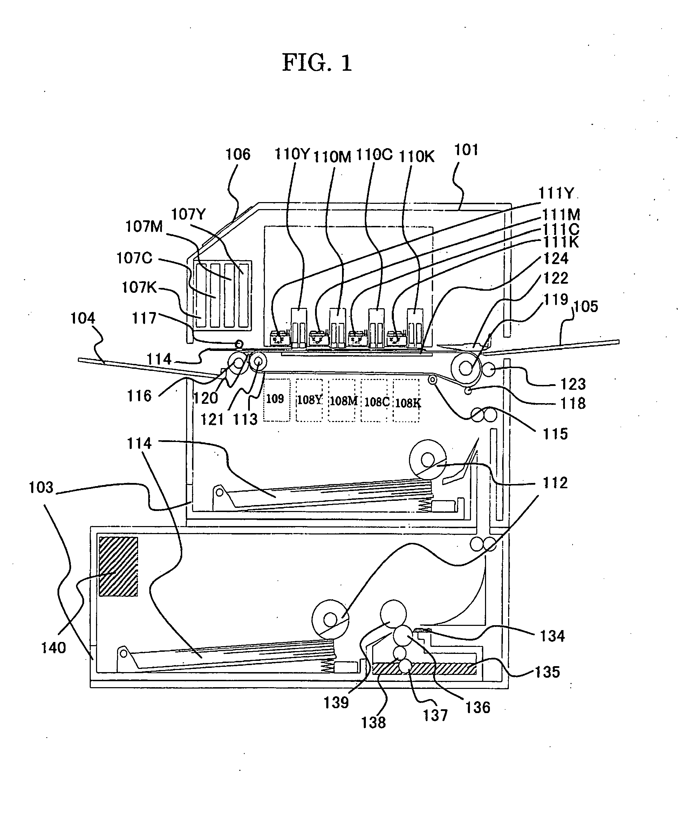

A schematic diagram (side plane explanatory diagram) of one example of the inkjet recording device is illustrated in FIG. 1.

The inkjet recording device 101 is equipped with head units 110K, 110C, 110M, 110Y, in each of which heads for ejecting an ink are accumulated, maintenance units 111K, 111C, 111M, 111Y, for performing a maintenance operation on a respective head unit, ink cartridges 107K, 107C, 107M, 107Y, for supplying an ink, and sub ink-tanks 108K, 108C, 108M, 108Y, for storing part of the ink supplied from the cartridge and supplying the ink to the head at an appropriate pressure.

The inkjet recording device 101 further contains a discharging system including a convey belt 113 for suctioning a recording medium 114 by a suction fan 120 and conveying the recording medium 114, conveying rollers 119, 121, for supporting the convey belt 113, a tension roller 115 for controlling so that the convey belt 113 keeps an appropriate tension, a platen 124 and platen roller 118 for giving an appropriate flatness to the convey belt 113, a charging roller 116 for giving static charges so that the recording medium 114 is adhered, a discharging roller 117 for pressing the recording medium 114, and a discharging tray 104 for storing the discharged recording medium 114, and a feeding system including a feeding tray 103 for storing recording media 114 to be printed, separation pads 112 and 122 for sending the recording media 114 one by one from the feeding tray 103, a counter roller 123 for securely adhering the sent recording medium 114 to the charging belt, and a manual feeding tray 105 used in the case where paper is fed manually.

Moreover, the inkjet recording device is further equipped with a waste liquid tank 109 for collecting the waste liquid discharged after the maintenance, and a control panel 106 capable of displaying operating the devise and displaying the state of the device.

A nozzle array of each head unit is aligned so as to be orthogonal to the conveyance direction of the recording medium 114, and is formed so as to be longer than a length of a recording region. The recording media 114 stored in the feeding tray 104 are separated into one piece by a separation roller, and the separated recording medium 114 is fixed onto the convey belt 113 by being pressed on the convey belt by a press roller. When the recording medium 114 is passed under the head unit, the recording medium 114 is patterned with droplets at high speed by jetting droplets to the recording medium 114. The recording medium 114 is then separated from the convey belt 113 by a separation craw, and discharged as a recorded matter into the discharging tray by a discharging roller and another discharging roller 117.

For this device, a coating system is provided as a system for treating a surface of a recording medium with a treatment liquid, and uses roller coating. The treatment liquid 135 is supplied from the treatment liquid storage tank 140 through a path (not illustrated), and taken out to a surface of a roller by a pumping roller 137, and is transferred to a film thickness controlling roller 138. The treatment liquid then transferred to the coating roller 136 is transferred to and applied to a recording medium 114 passed through between the coating roller 136 and the counter roller for coating 139.

The amount of the treatment liquid transferred to the coating roller 136 is controlled by adjusting the nip thickness with the coating roller 136. When an application of the treatment liquid is not desired, the treatment liquid present on the surface of the coating roller 136 can be scraped by pressing a movable blade 134 against the coating roller 136 so as not to leave the treatment liquid on the surface of the coating roller. In this manner, functional disorders caused by the residual treatment liquid on the coating roller 136 (e.g., increased viscosity due to the dried treatment liquid, bonding to the counter coating roller 139, and uneven application) can be prevented in advance. Alternatively, as illustrated in FIG. 1, another coating mechanism may be employed where feeding sections are provided at the upper side and the bottom side respectively. In this mechanism, the bottom feeding section is used when the treatment liquid is coated, and the upper feeding section is used when the treatment liquid is not coated.

Other than the aforementioned roller coating, the treatment liquid can also be spray-coated by an inkjet method. For example, a head similar to the head unit 110K is charged with the treatment liquid, and the treatment liquid is ejected onto a recording medium 114 in the same manner as when the ink is ejected. In this manner, an amount of the treatment liquid to be ejected, and a position for ejection can be controlled easily, and highly precisely. Moreover, the roller coating and spray coating may be used in combination.

Whichever method is used, the treatment liquid can be applied to a desired position in a desired amount. Furthermore, by heating the recording medium 114 onto which the treatment liquid and the ink have been applied by a hot air fan (not illustrated), the crosslink reaction between the organic acid in the treatment liquid and the epoxy resin is accelerated, and the drying speed of the ink is improved, to thereby improve fixing ability. Note that, the heating is performed on the recording medium 114 after printing by means of the hot air fan in this example, but heating may be performed on the recording medium 114 before printing, or performed by a hot roller other than a hot air fan.

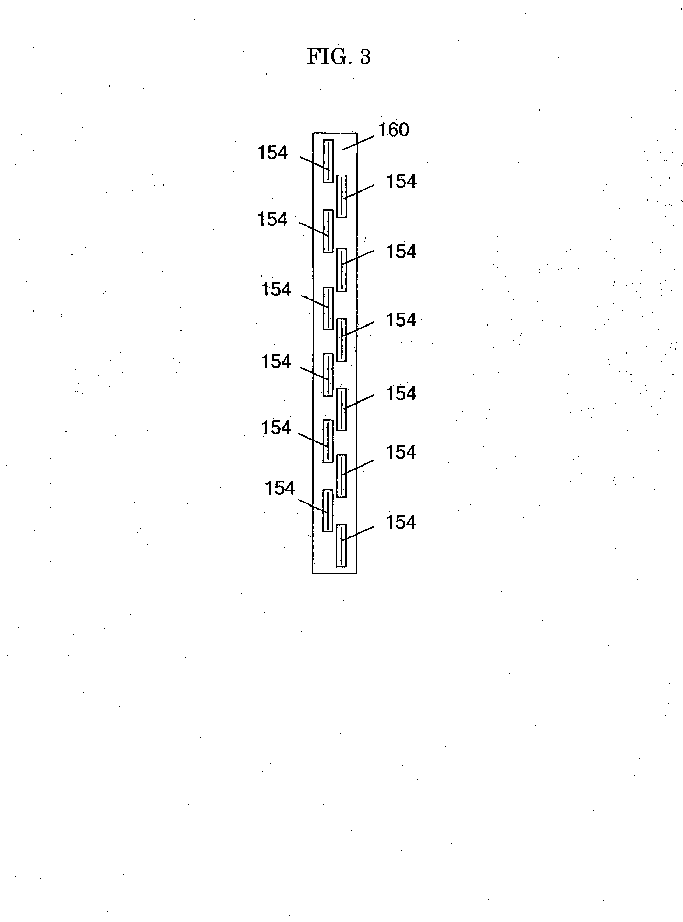

FIG. 3 is a schematic view of one example of a head arrangement on a head unit of the inkjet recording device.

The head unit contains heads 154 fixed on a head circumferential member 160, and the heads are fixed with a staggered arrangement so that the heads overlap with part of nozzle.

FIG. 4 is a schematic enlarged view of the head on the head unit of FIG. 3. Each head has a nozzle 200 which is two arrays of openings provided in a nozzle plate 201 in a staggered arrangement. The head and the head circumferential member are sealed with a filler 202 to remove any space on the nozzle surface.

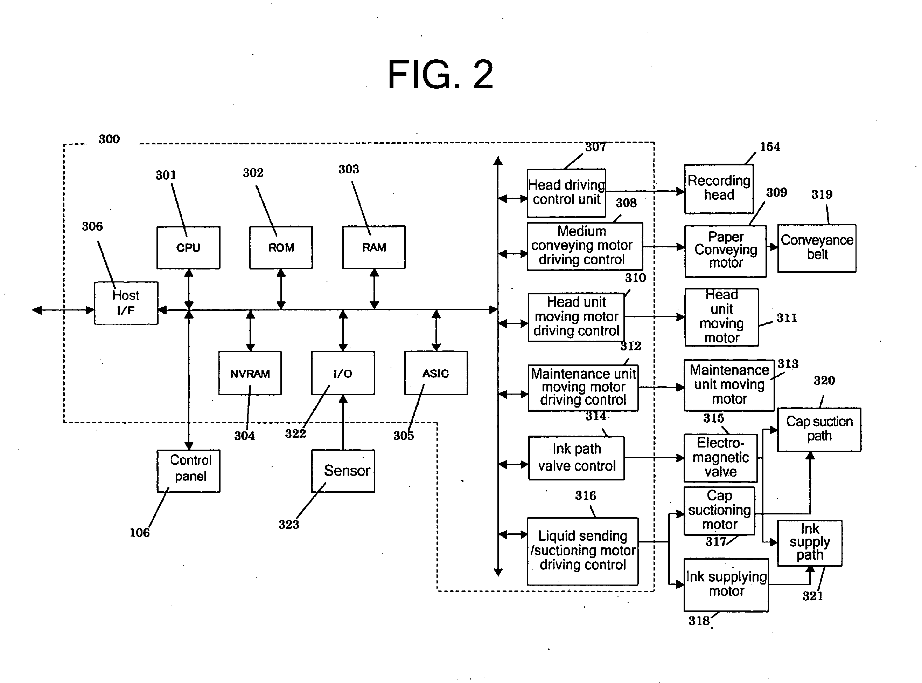

The outline of the control unit of the inkjet recording device depicted in FIG. 1 is explained with reference to FIG. 2 illustrating the schematic block explanatory diagram of the control unit.

The control unit 300 contains: CPU 301 for controlling the entire device; ROM 302 for storing a program CPU 301 executes, and fixed data such as a value for a contamination degree of a nozzle surface relative to an ejection of the ink used in the present invention, a threshold value for the contamination degree of the nozzle surface, and data for a driving wave; RAM 303 for temporarily storing image data and the like; a nonvolatile memory (NVRAM) 304 for keeping data while a power source of the device is shut out; and ASIC 305 for processing input/output signals, such as various signals for the image data and image processing for replacing positions of images, and other input/output signals for controlling the entire device.

Moreover, the control unit 300 contains: a host I/F 306 for sending and receiving data and signals to and from a host; a head drive controlling unit 307 for generating a drive wave for driving and controlling a pressure generating unit of the recording head 154; a recording medium conveying motor driving unit 308 for driving a recording medium conveying motor 309; a head unit moving motor drive controlling unit 312 for driving a head unit (carriage) moving motor 311; an ink channel valve controlling unit 314 for controlling opening and closing of an electromagnetic valve 315 of an ink channel; a delivery/suction motor drive controlling unit 316 for controlling driving of a cap suction motor 317 or ink supplying motor 318; and I/O 322 for inputting detecting signals from an encoder which outputs a detecting signal corresponding to a traveling amount and speed of the conveyance belt 113, detecting signals from a sensor 323 for detecting temperature and humidity environment (or can be either of them), detecting signals on the ink level of each subtank, and detecting signals from various sensors not shown in the diagram. The control unit 300 is connected to a control panel 106 to or on which information necessary to the device is input or displayed.

The control unit 300 receives at the host I/F 306 printing data and the like from a host via a cable or net, and in this case the host is such as an information-processing device (e.g., a personal computer), an image scanning device (e.g., an image scanner), and an imaging device (e.g., a digital camera).

CPU 301 reads out printing data into a receiving buffer contained in the host I/F 306 and analyzes the data, optionally makes the data to image-processed or repositioned by ASIC 305, synchronizes the image data (i.e. dot pattern data) which equivalent of one page for a head width of the recording head 154 with respect to a clock signal, and output the signal to the head drive controlling unit 307. Then, CPU 301 reads out printing data in the receiving buffer contained in the host I/F 306 and analyzes it. After carrying out necessary image processing or repositioning of the data by ASIC 305, the image data is output to the head drive controlling unit 307. Note that, the formation of the dot pattern data for image output may be stored as font data in, for example, ROM 302. Alternatively, the image data may be expanded to bit map data by a printer driver at the host side, and the bit map data may be output to the device.

The head drive controlling unit 307 selectively applies voltage to a pressure generating unit of the recording head 154 based on the image data (i.e., the dot pattern data) for one page of the recording head 154 input per page, and drives the recording head 154.

Although it is not shown in the diagram, in the case where the treatment liquid is coated by a roller, a control unit of a motor for application, a motor to be controlled, and a sensor for controlling are provided in the device, as it is necessary to control driving of a group of rollers for application, such as an application roller.

Furthermore, in the case where the treatment liquid is applied by an inkjet method, there is a possibility to cause nozzle clogging due to mixing with other colors, unless the maintenance operation is performed in a different manner from that of the other inks. Therefore, it is desirable that a maintenance unit moving motor is provided for the treatment liquid, separately from that for the ink.

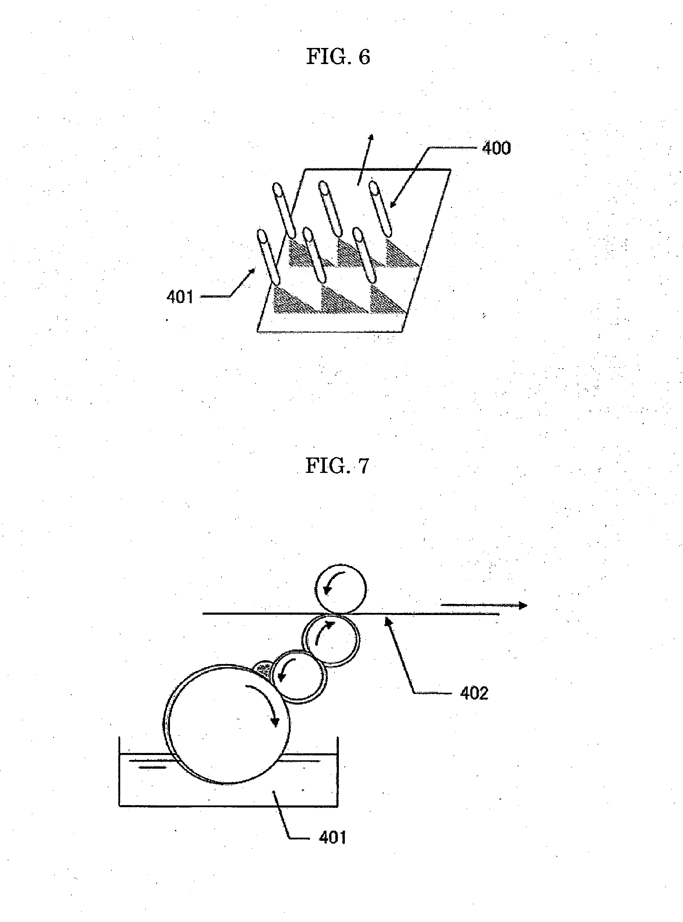

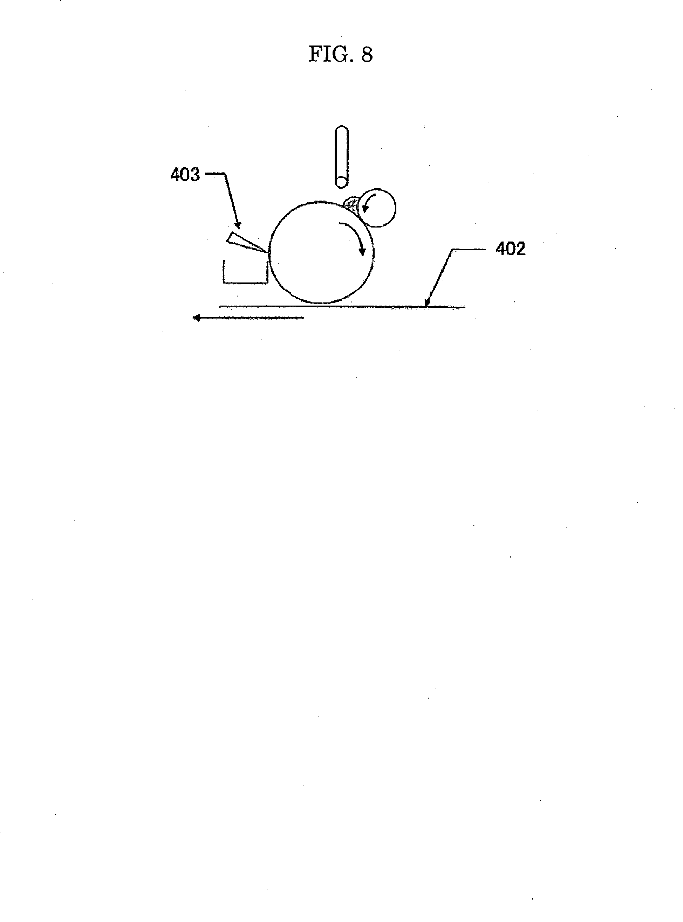

Note that, as for the embodiment for applying the treatment liquid to the recording medium 114, systems depicted in FIGs. 6 to 8 are included. In FIGs. 6 to 8, 400 denotes a recording ink, 401 denotes a treatment liquid, 402 denotes a recording medium and 403 denotes a treatment liquid scraping blade.

### Examples

The present invention will be more specifically explained through examples and comparative examples thereof, but these examples shall not be construed as limiting the scope of the present invention in any way.

### <Preparation of Ink>

### (Synthesis Example)

An automatic polymerization reactor (polymerization tester DSL-2AS, available from Todoroki Sangyo Co., Ltd.) having a reaction vessel equipped with a stirrer, a dripping device, a thermosensor, and a nitrogen inlet device set the upper side of the vessel was used. The reaction vessel was charged with 550.0 g of methyl ethyl ketone, and the internal atmosphere of the reaction vessel was replaced with nitrogen gas with stirring. After heating to 80°C while maintaining the internal atmosphere of the reaction vessel to the nitrogen atmosphere, a mixed solution of 75.0 g of 2-hydroxyethyl methacrylate, 77.0 g of methacrylic acid, 80.0 g of styrene, 150.0 g of butyl methacrylate, 98.0 g of butyl acrylate, 20.0 g of methyl methacrylate, and 40.0 g of PERBUTYL® O (NOF CORPORATION) was added dropwise by the dripping device over 4 hours. After the completion of dripping, the reaction mixture was further allowed to react at the same temperature for 15 hours, to thereby obtain a methyl ethyl ketone solution of an anionic group-containing styrene-acryl copolymer A having an acid value of 100 mgKOH/g, the weight average molecular weight of 21,000, and Tg (calculated value) of 31 °C. After the reaction, part of methyl ethyl ketone was removed under reduced pressure, to thereby obtain a copolymer A solution a non-volatile component of which had been adjusted to 50%.

### (Preparation Example 1)

A mixing chamber equipped with a cooling jacket was charged with 1,000 g of carbon black, 800 g of the above-prepared copolymer A solution, 143.0 g of a 20% sodium hydroxide aqueous solution, 100.0 g of methyl ethyl ketone, and 1957.0 g of water, and the mixture was stirred and mixed. The resulting mixture was passed through a disperser (SC Mill SC100, manufactured by Nippon Coke & Engineering Co., Ltd.) filled with zirconia beads having diameters of 0.3 mm to disperse the mixture in a circulation system (a system where the dispersion liquid from the disperser was returned to the mixing chamber) for 6 hours. During this operation, the rotation number was set at 2,700 rpm, and cold water was passed through the cooling jacket so that the temperature of the dispersion liquid was kept at 40°C or lower. After dispersing, the resulting dispersion liquid was taken out from the mixing chamber, followed by washing the flow paths of the mixing chamber and disperser with 10,000 g of water. This washing water was them combined with the dispersion liquid to thereby obtain a diluted dispersion liquid. The diluted dispersion liquid was placed in a glass distillation apparatus to remove the entire volume of methyl ethyl ketone, and part of water. After cooling the dispersion liquid to room temperature, 10% hydrochloric acid was added dropwise to adjust the pH to 4.5 with stirring. Then the solids were filtrated by a Nutsche filtration device, and the resultant was washed with water. The resulting cake was collected in a container, and 200.0 g of a 20% potassium hydroxide aqueous solution was added to the cake, followed by dispersing the mixture by a disperser (TK Homodisperser, manufactured by PRIMIX Corporation). To the resulting dispersion, water was added to adjust the non-volatile component, to thereby obtain an aqueous pigment dispersion liquid having the non-volatile component content of 20% by mass, in which the carbon black was dispersed as composite particles in each of which the carbon black was encapsulated in the carboxyl group-containing styrene-acryl copolymer neutralized in potassium hydroxide.

### (Preparation Example 2)

Materials, such as the aqueous pigment dispersion liquid obtained in Preparation Example 1, a water-soluble organic solvent, a surfactant, and a water, were mixed in the proportion (% by mass) presented in the column of respective examples and comparative examples in Tables 1 to 4, and the mixture.was filtered through a membrane filter having an average pore diameter of 0.8 µm, to thereby prepare an aqueous ink. Note that, the aqueous pigment dispersion liquid was added at such a proportion that the solids content of the aqueous pigment became 10% by mass in the resulting ink.

### (Preparation Example 3)

### <Preparation of Treatment Liquid>

Materials such as an organic acid, a surfactant, and water were mixed in a ratio (% by mass) presented in the column of the respective examples and comparative examples in Tables 1 to 4, and the mixture was filtered through a membrane filter having the average pore diameter of 0.8 µm, to thereby prepare a treatment liquid.

Next, each treatment liquid was uniformly applied onto a recording medium (My Paper manufactured by Ricoh Company Limited) to give the deposition amount of 2 g/m² using a wire bar (coil diameter: 0.02 mm) manufactured by Kobayashi Engineering Works., Ltd.

The ink was then ejected onto the recording medium onto which the treatment liquid had been applied by means of an inkjet recording device (IPSIO GX5000, manufactured by Ricoh Company Limited) at printing speed of 30 rpm (page per minute) to form an image of a square having a side of 3 cm, to thereby obtain a print sample. Note that, in Example 19, the recording medium onto which the treatment liquid and the ink had been deposited was heated by a hot air fan.

Various properties of each print sample were evaluated in the following manners. The results are presented in Tables 1 to 4.

### <Image Density>

A solid imaging part of each print sample was measured by a spectrodensitometer (939) of X-Rite.

### <Transfer Density>

A solid imaging part of each print sample was rubbed against a cloth attached onto a clock meter (manufactured by TOYO SEIKI SEISAKU-SHO, LTD.) and the transfer density of the ink on the cloth after rubbing was measured using a spectrodensitometer (939) manufactured by X-Rite. The lower the transfer density is, the more preferable the fixing ability of the image is.

### < Evaluation of Foaming>

The inks and treatment liquids mixed and prepared based on the formulations of Examples and Comparative Examples were each placed in a 100 mL-measuring cylinder in an amount of 10 mL, and left to stand for one day. Afterward, the measuring cylinder was placed in a thermostat water bath of 10°C for 30 minutes or longer so that the liquid temperature was entirely constant. After the liquid temperature had sufficiently become constant, air was blown into the liquid with a predetermined syringe to generate foam up to 100 mL. After 30 seconds from foam generation, the height (mL) of the foam was visually confirmed. In the following tables, * means 'not accoding to the invention'.

**Table 1**

| | | Ex. 1 | Ex. 2 | Ex. 3 | Ex. 4 | Ex. 5 | Ex. 6 | Ex. 7* |
|---|---|---|---|---|---|---|---|---|
| Treatment liquid | | | | | | | | |
| Organic acid | Lactic acid | 5.00 | 5.00 | 5.00 | 5.00 | 5.00 | 5.00 | 5.00 |
| | Ammonium lactate | | | | | | | |
| | Malic acid | | | | | | | |
| Surfactant | FS300 (effective ingredient:40wt%) | | | | | | | |
| | Fluorosurfactant of Structural formula F | 0.15 | 0.15 | 0.15 | 0.15 | 0.15 | 0.15 | 0.15 |
| Defoaming agent | N-octyl-2-pyrrolidone | 0.35 | 0.35 | 0.35 | 0.35 | 0.35 | 0.35 | 0.35 |
| | 2,4,7,9-tetramethyl decane-4,7-diol | | | | | | | |
| | 2,5,8,11-tetramethyl dodecane-5,8-diol | | | | | | | |
| Epoxy resin | Epoxy resin of Formula 1 | | | | 5.00 | | | |
| | Epoxy resin of Formula 2 | 1.00 | 5.00 | 7.50 | | | | |
| | Epoxy resin of Formula 3 | | | | | 5.00 | | |
| | Epoxy resin of Formula 4 | | | | | | 5.00 | |
| Crosslinking resin | Oxazoline group -containing polymer | | | | | | | |
| Water | Ion-exchanged water | 93.50 | 89.50 | 87.00 | 89.50 | 89.50 | 89.50 | 94.50 |
| Total | | 100 | 100 | 100 | 100 | 100 | 100 | 100 |
| Ink | | | | | | | | |
| Pigment dispersion | Black dispersion | 50.00 | 50.00 | 50.00 | 50.00 | 50.00 | 50.00 | 50.00 |
| Water-soluble organic solvent | Glycerin | 17.00 | 17.00 | 17.00 | 17.00 | 17.00 | 17.00 | 17.00 |
| | 1,3-butanediol | 10.00 | 10.00 | 10.00 | 10.00 | 10.00 | 10.00 | 10.00 |
| Surfactant | FS300 (effective ingredient:40wt%) | | | | | | | |
| | Fluorosurfactant of Structural formula F | 0.30 | 0.30 | 0.30 | 0.30 | 0.30 | 0.30 | 0.30 |
| Defoaming agent | Silicone-based defoaming agent | | | | | | | |
| | N-octyl-2-pyrrolidone | 0.70 | 0.70 | 0.70 | 0.70 | 0.70 | 0.70 | 0.70 |
| | 2,4,7,9-tetramethyl decane-4,7-diol | | | | | | | |
| | 2,5,8,11-tetramethyl dodecane-5,8-diol | | | | | | | |
| Epoxy resin | Epoxy resin of Formula 1 | | | | | | | |
| | Epoxy resin of Formula 2 | | | | | | | 0.10 |
| | Epoxy resin of Formula 3 | | | | | | | |
| | Epoxy resin of Formula 4 | | | | | | | |
| Penetrating agent | 1,2-octanediol | 2.00 | 2.00 | 2.00 | 2.00 | 2.00 | 2.00 | 2.00 |
| pH regulator | 2-amino-2-ethyl -1,3-propanediol | 0.50 | 0.50 | 0.50 | 0.50 | 0.50 | 0.50 | 0.50 |
| Antifungus | LV (S) | 0.10 | 0.10 | 0.10 | 0.10 | 0.10 | 0.10 | 0.10 |
| Water | Ion-exchaned water | 19.40 | 19.40 | 19.40 | 19.40 | 19.40 | 19.40 | 19.30 |
| Total | | 100 | 100 | 100 | 100 | 100 | 100 | 100 |
| Heating | | None | None | None | None | None | None | None |
| Height of foam after 30 s. (treatment liquid) [mL] | | 0 | 0 | 0 | 0 | 0 | 0 | 0 |
| Height of foam after 30 s. (ink) [mL] | | 0 | 0 | 0 | 0 | 0 | 0 | 0 |
| Image density [-] | | 1.42 | 1.36 | 1.34 | 1.34 | 1.35 | 1.32 | 1.41 |
| Transfer density [-] | | 0.112 | 0.093 | 0.131 | 0.135 | 0.133 | 0.055 | 0.132 |

**Table 2**

| | | Ex. 8* | Ex. 9* | Ex. 10* | Ex. 11* | Ex. 12* | Ex. 13* | Ex. 14 |
|---|---|---|---|---|---|---|---|---|
| Treatment liquid | | | | | | | | |
| Organic acid | Lactic acid | 5.00 | 5.00 | 5.00 | 5.00 | 5.00 | 5.00 | 5.00 |
| | Ammonium lactate | | | | | | | |
| | Malic acid | | | | | | | |
| Surfactant | FS300 (effective ingredient:40wt%) | | | | | | | |
| | Fluorosurfactant of Structural formula F | 0.15 | 0.15 | 0.15 | 0.15 | 0.15 | 0.15 | 0.15 |
| Defoaming agent | N-octyl-2-pyrrolidone | 0.35 | 0:35 | 0.35 | 0.35 | 0.35 | 0.35 | 0.35 |
| | 2,4,7,9-tetramethyl decane-4,7-diol | | | | | | | |
| | 2,5,8,11-tetramethyl dodecane-5,8-diol | | | | | | | |
| Epoxy resin | Epoxy resin of Formula 1 | | | | | | | |
| | Epoxy resin of Formula 2 | | | | | | | 5.00 |
| | Epoxy resin of Formula 3 | | | | | | | |
| | Epoxy resin of Formula 4 | | | | | | | |
| Crosslinking resin | Oxazoline group -containing polymer | | | | | | | |
| Water | Ion-exchanged water | 94.50 | 94.50 | 94.50 | 94.50 | 94.50 | 94.50 | 89.50 |
| Total | | 100 | 100 | 100 | 100 | 100 | 100 | 100 |
| Ink | | | | | | | | |
| Pigment dispersion | Black dispersion | 50.00 | 50.00 | 50.00 | 50.00 | 50.00 | 50.00 | 50.00 |
| Water-soluble organic solvent | Glycerin | 17.00 | 17.00 | 17.00 | 17.00 | 17.00 | 17.00 | 17.00 |
| | 1,3-butanediol | 10.00 | 10.00 | 10.00 | 10.00 | 10.00 | 10.00 | 10.00 |
| Surfactant | FS300 (effective ingredient:40wt%) | | | | | | | |
| | Fluorosurfactant of Structural formula F | 0.30 | 0.30 | 0.30 | 0.30 | 0.30 | 0.30 | 0.30 |
| Defoaming agent | Silicone-based defoaming agent | | | | | | | |
| | N-octyl-2-pyrrolidone | 0.70 | 0.70 | 0.70 | 0.70 | 0.70 | 0.70 | 0.70 |
| | 2,4,7,9-tetramethyl decane-4,7-diol | | | | | | | |
| | 2,5,8,11-tetramethyl dodecane-5,8-diol | | | | | | | |
| Epoxy resin | Epoxy resin of Formula 1 | | | | 1.00 | | | |
| | Epoxy resin of Formula 2 | 0.50 | 1.00 | 2.50 | | | | 0.10 |
| | Epoxy resin of Formula 3 | | | | | 1.00 | | |
| | Epoxy resin of Formula 4 | | | | | | 1.00 | |
| Penetrating agent | 1,2-octanediol | 2.00 | 2.00 | 2.00 | 2.00 | 2.00 | 2.00 | 2.00 |
| pH regulator | 2-amino-2-ethyl -1,3-propanediol | 0.50 | 0.50 | 0.50 | 0.50 | 0.50 | 0.50 | 0.50 |
| Antifungus | LV (S) | 0.10 | 0.10 | 0.10 | 0.10 | 0.10 | 0.10 | 0.10 |
| Water | Ion-exchaned water | 18.90 | 18.40 | 16.90 | 18.40 | 18.40 | 18.40 | 18.40 |
| Total | | 100 | 100 | 100 | 100 | 100 | 100 | 100 |
| Heating | | None | None | None | None | None | None | None |
| Height of foam after 30 s. (treatment liquid) [mL] | | 0 | 0 | 0 | 0 | 0 | 0 | 0 |
| Height of foam after 30 s. (ink) [mL] | | 0 | 0 | 0 | 0 | 0 | 0 | 0 |
| Image density [-] | | 1.40 | 1.43 | 1.40 | 1.40 | 1.43 | 1.39 | 1.38 |
| Transfer density [-] | | 0.110 | 0.091 | 0.135 | 0.060 | 0.116 | 0.062 | 0.081 |

**Table 3**

| | | Ex. 15 | Ex. 16 | Ex. 17 | Ex. 18 | Ex. 19 | Ex. 20 | Ex. 21 |
|---|---|---|---|---|---|---|---|---|
| Treatment liquid | | | | | | | | |
| Organic acid | Lactic acid | 5.00 | 5.00 | | 5.00 | 5.00 | | 5.00 |
| | Ammonium lactate | | | 5.00 | | | | |
| | Malic acid | | | | | | 5.00 | |
| Surfactant | FS300 (effective ingredient:40wt%) | | | | | | | |
| | Fluorosurfactant of Structural formula F | 0.15 | 0.15 | 0.15 | 0.15 | 0.15 | 0.15 | 0.15 |
| Defoaming agent | N-octyl-2-pyrrolidone | | | 0.35 | 0.35 | 0.35 | 0.35 | 0.35 |
| | 2,4,7,9-tetramethyl decane-4,7-diol | 0.35 | | | | | | |
| | 2,5,8,11-tetramethyl dodecane-5,8-diol | | 0.35 | | | | | |
| Epoxy resin | Epoxy resin of Formula 1 | | | | | | | |
| | Epoxy resin of Formula 2 | 5.00 | 5.00 | 5.00 | 5.00 | 5.00 | 5.00 | 5.00 |
| | Epoxy resin of Formula 3 | | | | | | | |
| | Epoxy resin of Formula 4 | | | | | | | |
| Crosslinking resin | Oxazoline group -containing polymer | | | | 10.00 | | | |
| Water | Ion-exchanged water | 89.50 | 89.50 | 89.50 | 79.50 | 89.50 | 89.50 | 89.50 |
| Total | | 100 | 100 | 100 | 100 | 100 | 100 | 100 |
| Ink | | | | | | | | |
| Pigment dispersion | Black dispersion | 50.00 | 50.00 | 50.00 | 50.00 | 50.00 | 50.00 | 50.00 |
| Water-soluble organic solvent | Glycerin | 17.00 | 17.00 | 17.00 | 17.00 | 17.00 | 17.00 | 17.00 |
| | 1,3-butanediol | 10.00 | 10.00 | 10.00 | 10.00 | 10.00 | 10.00 | 10.00 |
| Surfactant | FS300 (effective ingredient:40wt%) | | | | | | | |
| | Fluorosurfactant of Structural formula F | 0.30 | 0.30 | 0.30 | 0.30 | 0.30 | 0.30 | 0.30 |
| Defoaming agent | Silicone-based defoaming agent | | | | | | | |
| | N-octyl-2-pyrrolidone | 0.70 | 0.70 | 0.70 | 0.70 | 0.70 | 0.70 | |
| | 2,4,7,9-tetramethyl decane-4,7-diol | | | | | | | 0.70 |
| | 2,5,8,11-tetramethyl dodecane-5,8-diol | | | | | | | |
| Epoxy resin | Epoxy resin of Formula 1 | | | | | | | |
| | Epoxy resin of Formula 2 | 1.00 | 1.00 | 1.00 | 1.00 | | | 1.00 |
| | Epoxy resin of Formula 3 | | | | | | | |
| | Epoxy resin of Formula 4 | | | | | | | |
| Penetrating agent | 1,2-octanediol | 2.00 | 2.00 | 2.00 | 2.00 | 2.00 | 2.00 | 2.00 |
| pH regulator | 2-amino-2-ethyl -1,3-propanediol | 0.50 | 0.50 | 0.50 | 0.50 | 0.50 | 0.50 | 0.50 |
| Antifungus | LV (S) | 0.10 | 0.10 | 0.10 | 0.10 | 0.10 | 0.10 | 0.10 |
| Water | Ion-exchaned water | 18.40 | 18.40 | 18.40 | 18.40 | 19.40 | 19.40 | 18.40 |
| Total | | 100 | 100 | 100 | 100 | 100 | 100 | 100 |
| Heating | | None | None | None | None | None | None | Done |
| Height of foam after 30 s. (treatment liquid) [mL] | | 0 | 0 | 0 | 0 | 0 | 0 | 0 |
| Height of foam after 30 s. (ink) [mL] | | 0 | 0 | 0 | 0 | 0 | 0 | 0 |
| Image density [-] | | 1.38 | 1.38 | 1.41 | 1.31 | 1.40 | 1.32 | 1.38 |
| Transfer density [-] | | 0.081 | 0.081 | 0.078 | 0.054 | 0.089 | 0.137 | 0.079 |

**Table 4**

| | | Ex. 22 | Ex. 23 | Comp. Ex. 1 | Comp. Ex. 2 | Comp. Ex. 3 |
|---|---|---|---|---|---|---|
| Treatment liquid | | | | | | |
| Organic acid | Lactic acid | 5.00 | 5.00 | | 5.00 | 5.00 |
| | Ammonium lactate | | | | | |
| | Malic acid | | | | | |
| Surfactant | FS300 (effective ingredient:40wt%) | | 1.25 | | 1.25 | |
| | Fluorosurfactant of Structural formula F | 0.15 | | | | 0.15 |
| Defoaming agent | N-octyl-2-pyrrolidone | 0.35 | | | | 0.35 |
| | 2,4,7,9-tetramethyl decane-4,7-diol | | | | | |
| | 2,5,8,11-tetramethyl dodecane-5,8-diol | | | | | |
| Epoxy resin | Epoxy resin of Formula 1 | | | | | |
| | Epoxy resin of Formula 2 | 5.00 | 5.00 | | | |
| | Epoxy resin of Formula 3 | | | | | |
| | Epoxy resin of Formula 4 | | | | | |
| Crosslinking resin | Oxazoline group -containing polymer | | | | | |
| Water | Ion-exchanged water | 89.50 | 88.75 | | 93.75 | 94.50 |
| Total | | 100 | 100 | - | 100 | 100 |
| Ink | | | | | | |
| Pigment dispersion | Black dispersion | 50.00 | 50.00 | 50.00 | 50.00 | 50.00 |
| Water-soluble organic solvent | Glycerin | 17.00 | 17.00 | 17.00 | 17.00 | 17.00 |
| | 1,3-butanediol | 10.00 | 10.00 | 10.00 | 10.00 | 10.00 |
| Surfactant | FS300 (effective ingredient:40wt%) | | 2.50 | 2.50 | 2.50 | |
| | Fluorosurfactant of Structural formula F | 0.30 | | | | 0.30 |
| Defoaming agent | Silicone-based defoaming agent | | | 0.10 | 0.10 | |
| | N-octyl-2-pyrrolidone | | | | | 0.70 |
| | 2,4,7,9-tetramethyl decane-4,7-diol | | | | | |
| | 2,5,8,11-tetramethyl dodecane-5,8-diol | 0.70 | | | | |
| Epoxy resin | Epoxy resin of Formula 1 | | | | | |
| | Epoxy resin of Formula 2 | 1.00 | 1.00 | | | |
| | Epoxy resin of Formula 3 | | | | | |
| | Epoxy resin of Formula 4 | | | | | |
| Penetrating agent | 1,2-octanediol | 2.00 | 2.00 | 2.00 | 2.00 | 2.00 |
| pH regulator | 2-amino-2-ethyl -1,3-propanediol | 0.50 | 0.50 | 0.50 | 0.50 | 0.50 |
| Antifungus | LV (S) | 0.10 | 0.10 | 0.10 | 0.10 | 0.10 |
| Water | Ion-exchaned water | 18.40 | 16.90 | 17.80 | 17.80 | 19.40 |
| Total | | 100 | 100 | 100 | 100 | 100 |
| Heating | | None | None | None | None | None |
| Height of foam after 30 s. (treatment liquid) [mL] | | 0 | 90 | - | 90 | 0 |
| Height of foam after 30 s. (ink) [mL] | | 0 | 90 | 90 | 90 | 0 |
| Image density [-] | | 1.37 | 1.40 | 1.23 | 1.44 | 1.43 |
| Transfer densitv [-] | | 0.08 | 0.083 | - | 0.145 | 0.144 |

The materials in Tables 1 to 4 are as follows.
FS-300: Zonyl® FS-300 of Dupont
Epoxy resins (all available from Sakamoto Yakuhin Kogyo Co., Ltd.)

   Structural formula 1: (SR-GLG)

   Structural formula 2: (SR-4GL)

   Structural formula 3: (SR-SEP)

   Structural formula 4: (SR-GTA80)
Silicone-based defoaming agent: self-emulsifying silicone defoaming agent KM-72F (Shin-Etsu Chemical Co., Ltd.)
Oxazoline group-containing polymer: EPOCROS WS-700 of Nippon Shokubai Co., Ltd.
LV(S): ProxelLV(s) (™) manufactured by Avecia Inc.
Fluorosurfactant represented by the following structural formula F

   C₄F₉-CH₂CH(OH)CH₂O-(CH₂CH₂O)-₂₃-CH₂CH(OH)CH₂-C₄F₉ Structural Formula F

### Reference Signs List

- 101: inkjet recording device
- 103: feeding tray
- 104: discharging tray
- 105: manual feeding tray
- 106: control panel
- 107K: ink cartridge
- 107C: ink cartridge
- 107M: ink cartridge
- 107Y: ink cartridge
- 108K: sub ink-tank
- 108C: sub ink-tank
- 108M: sub ink-tank
- 108Y: sub ink-tank
- 109: waste liquid tank
- 110K: head unit
- 110C: head unit
- 110M: head unit
- 110Y: head unit
- 111K: maintenance unit
- 111C: maintenance unit
- 111M: maintenance unit
- 111Y: maintenance unit
- 112: separation pad
- 113: convey belt
- 114: recording medium
- 115: tension roller
- 116: charging roller
- 117: discharging roller
- 118: platen roller
- 119: conveying roller
- 120: suction fan
- 121: conveying roller
- 122: separation pad
- 123: counter roller
- 124: platen
- 134: movable blade
- 135: treatment liquid
- 136: coating roller
- 137: pumping roller
- 138: film thickness controlling roller
- 139: counter roller for coating
- 140: treatment liquid storage tank
- 154: head
- 160: head circumferential member
- 200: nozzle
- 201: nozzle plate
- 202: filler
- 240: ink cartridge
- 241: ink bag
- 242: ink inlet
- 243: ink outlet
- 244: cartridge case
- 300: control unit
- 301: CPU
- 302: ROM
- 303: RAM
- 304: nonvolatile memory (NVRAM)
- 305: ASIC
- 306: host I/F
- 307: head drive controlling unit
- 308: recording medium conveying motor driving unit
- 309: recording medium conveying motor
- 310: head unit (carriage) moving motor drive controlling unit
- 311: head unit (carriage) moving motor
- 312: maintenance unit moving motor drive controlling unit
- 313: maintenance unit moving motor
- 314: ink channel valve controlling unit
- 315: electromagnetic valve of ink channel
- 316: delivery-suction motor drive controlling unit
- 317: cap suction motor
- 318: ink supplying motor
- 319: convey belt
- 320: cap suction channel
- 321: ink supplying channel
- 322: I/O
- 323: sensor
- 400: recording ink
- 401: treatment liquid
- 402: recording medium
- 403: treatment liquid scraping blade

## Claims

1. An ink set, comprising:
a treatment liquid containing at least an organic acid, a surfactant and water; and
an ink containing at least a colorant, a water-soluble organic solvent, a carboxyl group-containing resin, a surfactant, and water,
**characterized in that** the treatment liquid, or both the treatment liquid and the ink further contain an epoxy resin.

2. The ink set according to claim 1, wherein the epoxy resin is at least one selected from the group consisting of compounds represented by the following structural formulae 1 to 4: 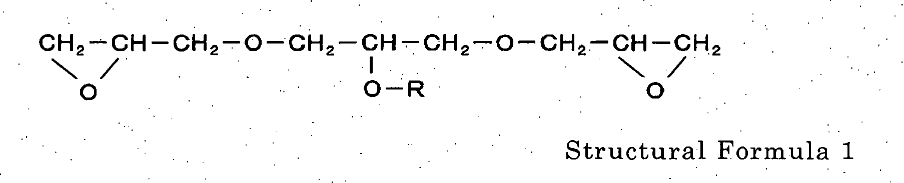 where R is a hydrogen atom or a group represented by the following formula : 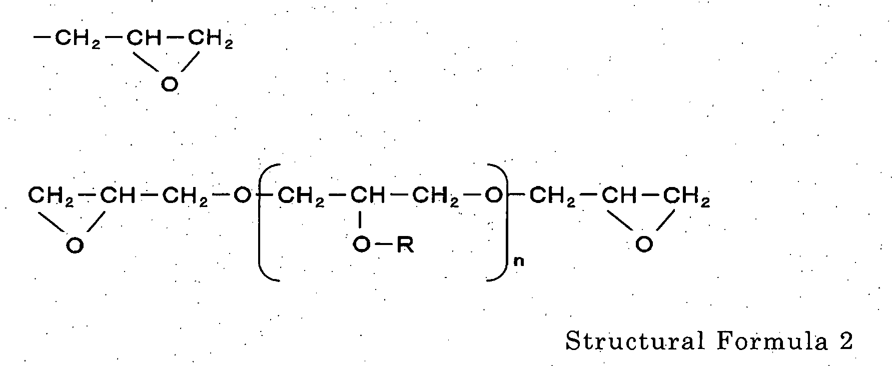 where R is a hydrogen atom or a group represented by the following formula; and n is an integer of 2 to 10, 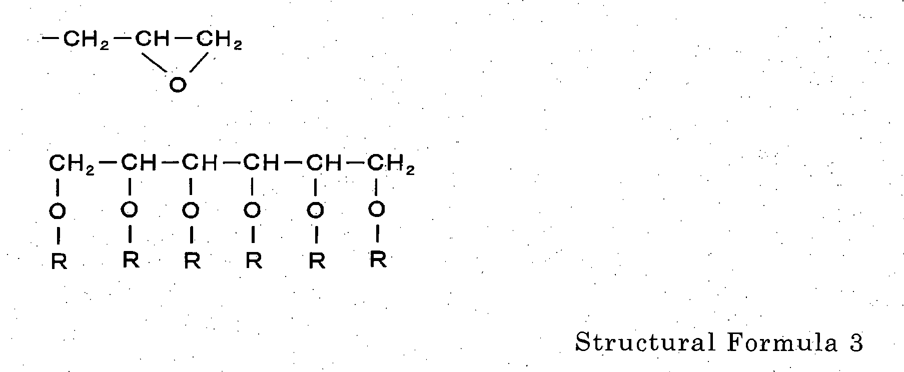 where R is a hydrogen atom or a group represented by the following formula, provided that not all of R are hydrogen atoms; and n is an integer of 2 to 10,

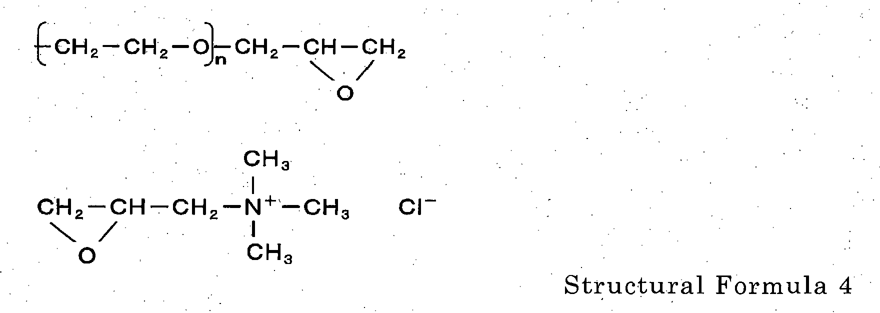

3. The ink set according to any of claim 1 or 2, wherein the treatment liquid contains the epoxy resin, and the epoxy resin is contained therein in an amount of 5% by mass or smaller relative to the total amount of the treatment liquid.

4. The ink set according to any one of claims 1 to 3, wherein the ink contains the epoxy resin, and the epoxy resin is contained therein in an amount of 1% by mass or smaller relative to the total amount of the ink.

5. The ink set according to any one of claims 1 to 4, wherein the organic acid is lactic acid or a salt thereof.

6. The ink set according to any one of claims 1 to 5, wherein the surfactant is a fluorosurfactant.

7. The ink set according to claim 6, wherein the fluorosurfactant is a compound represented by the following structural formula :
C₄F₉-CH₂CH(OH)CH₂O-(CH₂CH₂O)₂₃-CH₂CH(OH)CH₂-C₄F₉

8. The ink set according to any one of claims 1 to 7, wherein the treatment liquid and the ink both further contain a deforming agent.

9. The ink set according to claim 8, wherein the defoaming agent is N-octyl-2-pyrrolidone, 2,4,7,9-tetramethyldecane-4,7-diol, or 2,5,8,11-tetramethyldodecane-5,8-diol.

10. The ink set according to any one of claims 1 to 9, wherein the treatment liquid further contains a water-soluble oxazoline group-containing polymer a side chain of which contains an oxazoline group.

11. A cartridge, comprising:
a casing and
the ink set as defined in any one of claims 1 to 10,
wherein the casing is charged with the treatment liquid, and the ink of the inkset.

12. An inkjet recording method, comprising:
applying a treatment liquid onto a recording medium; and
ejecting an ink onto the recording medium; onto which the treatment liquid has been applied, to form an image,
wherein the treatment liquid and the ink are the treatment liquid and ink of the ink set as defined in any one of claims 1 to 10.

13. The inkjet recording method according to claim 12, further comprising heating.

14. An inkjet recording device, comprising:
the ink set as defined in any one of claims 1 to 10;
a treatment liquid applying unit (134-140) configured to apply the treatment liquid of the ink set onto a recording medium (114); and
an image forming unit (107K, 107C, 107M, 107Y) configured to eject the ink of the ink set onto the recording medium (114), onto which the treatment liquid has been applied, to form an image.

## Patentansprüche

1. Tintensatz, umfassend:
eine Behandlungsflüssigkeit, die mindestens eine organische Säure, ein Tensid und Wasser enthält; und
eine Tinte, die mindestens ein Farbmittel, ein wasserlösliches organisches Lösungsmittel, ein eine Carboxylgruppe enthaltendes Harz, ein Tensid und Wasser enthält,
**dadurch gekennzeichnet, dass** die Behandlungsflüssigkeit oder sowohl die Behandlungsflüssigkeit als auch die Tinte des Weiteren ein Epoxidharz enthalten.

2. Tintensatz nach Anspruch 1, wobei das Epoxidharz mindestens eines ist ausgewählt aus der Gruppe bestehend aus Verbindungen, die durch die folgenden strukturellen Formeln 1 bis 4 dargestellt sind: 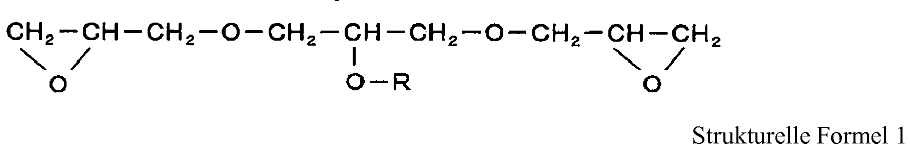 wobei R ein Wasserstoffatom oder eine Gruppe ist, die durch die folgende Formel dargestellt ist: 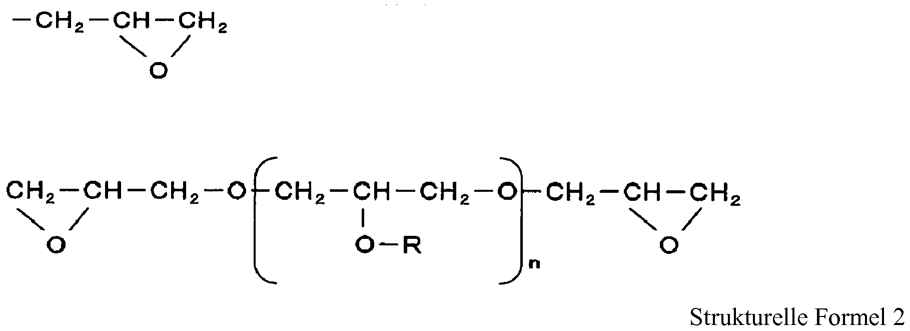 wobei R ein Wasserstoffatom oder eine Gruppe ist, die durch die folgende Formel dargestellt ist; und n eine ganze Zahl von 2 bis 10 ist, 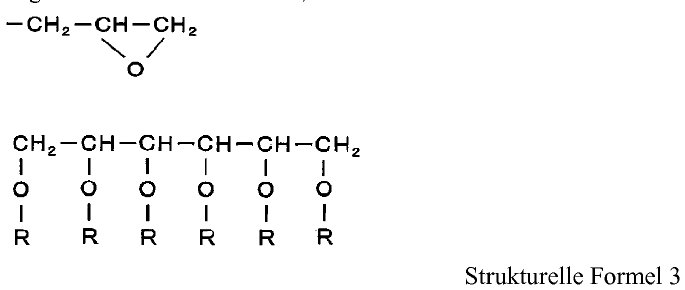 wobei R ein Wasserstoffatom oder eine Gruppe ist, die durch die folgende Formel dargestellt ist, vorausgesetzt, dass nicht alle von R Wasserstoffatome sind; und n eine ganze Zahl von 2 bis 10 ist,

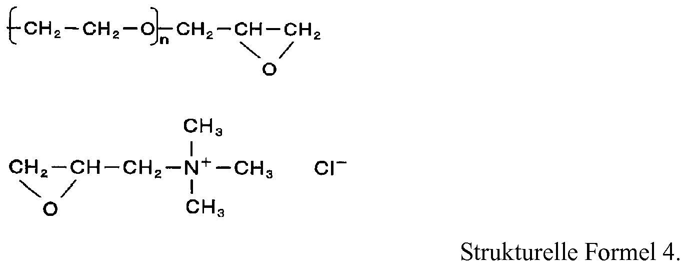

3. Tintensatz nach einem der Ansprüche 1 oder 2, wobei die Behandlungsflüssigkeit Epoxidharz enthält und das Epoxidharz darin in einer Menge von 5 Masse-% oder weniger, mit Bezug auf die Gesamtmenge der Behandlungsflüssigkeit, enthalten ist.

4. Tintensatz nach einem der Ansprüche 1 bis 3, wobei die Tinte Epoxidharz enthält und das Epoxidharz darin in einer Menge von 1 Masse-% oder weniger, mit Bezug auf die Gesamtmenge der Tinte, enthalten ist.

5. Tintensatz nach einem der Ansprüche 1 bis 4, wobei die organische Säure Milchsäure oder ein Salz davon ist.

6. Tintensatz nach einem der Ansprüche 1 bis 5, wobei das Tensid ein Fluortensid ist.

7. Tintensatz nach Anspruch 6, wobei das Fluortensid eine Verbindung ist, die durch die folgende strukturelle Formel dargestellt ist; C₄F₉-CH₂CH(OH)CH₂O-(CH₂CH₂O)₂₃-CH₂CH(OH)CH₂-C₄F₉.

8. Tintensatz nach einem der Ansprüche 1 bis 7, wobei die Behandlungsflüssigkeit und die Tinte beide des Weiteren ein Entschäumungsmittel enthalten.

9. Tintensatz nach Anspruch 8, wobei das Entschäumungsmittel N-Octyl-2-pyrrolidon,
2,4,7,9-Tetramethyldecan-4,7-diol oder
2,5,8,11-Tetramethyldodecan-5,8-diol ist.

10. Tintensatz nach einem der Ansprüche 1 bis 9, wobei die Behandlungsflüssigkeit des Weiteren ein wasserlösliches, eine Oxazolingruppe enthaltendes Polymer enthält, eine Seitenkette dessen eine Oxazolingruppe enthält.

11. Patrone umfassend:
ein Gehäuse; und
den Tintensatz wie in einem der Ansprüche 1 bis 10 definiert,
wobei das Gehäuse mit der Behandlungsflüssigkeit und der Tinte des Tintensatzes beaufschlagt ist.

12. Tintenstrahlaufzeichnungsverfahren, umfassend:
das Aufbringen einer Behandlungsflüssigkeit auf das Aufzeichnungsmedium; und
das Ausstoßen einer Tinte auf das Aufzeichnungsmedium, auf das die Behandlungsflüssigkeit aufgebracht worden ist, um ein Bild zu bilden,
wobei die Behandlungsflüssigkeit und die Tinte die Behandlungsflüssigkeit und die Tinte des Tintensatzes wie in einem der Ansprüche 1 bis 10 definiert, sind.

13. Tintenstrahlaufzeichnungsverfahren nach Anspruch 12, des Weiteren Erhitzen umfassend.

14. Tintenstahlaufzeichnungsvorrichtung, umfassend:
den Tintensatz wie in einem der Ansprüche 1 bis 10 definiert;
eine Behandlungsflüssigkeits-Auftragseinheit (134 - 140), die zum Aufbringen der Behandlungsflüssigkeit des Tintensatzes auf ein Aufzeichnungsmedium (114) konfiguriert ist; und
eine ein Bild bildende Einheit (107K, 107C, 107M, 107Y), die zum Ausstoßen der Tinte des Tintensatzes auf das Aufzeichnungsmedium (114), auf das die Behandlungsflüssigkeit aufgebracht worden ist, um ein Bild zu bilden, konfiguriert ist.

## Revendications

1. Jeu d'encre, comprenant:
un liquide de traitement contenant au moins un acide organique, un tensioactif et de l'eau; et
une encre contenant au moins un colorant, un solvant organique soluble dans l'eau, une résine contenant le groupe carboxyle, un tensioactif, et de l'eau,
**caractérisé en ce que** le liquide de traitement, ou à la fois le liquide de traitement et l'encre contiennent en outre une résine époxy.

2. Jeu d'encre selon la revendication 1, dans lequel la résine époxy est au moins l'une sélectionnée parmi le groupe constitué des composés représentés par les formules structurelles suivantes 1 à 4: 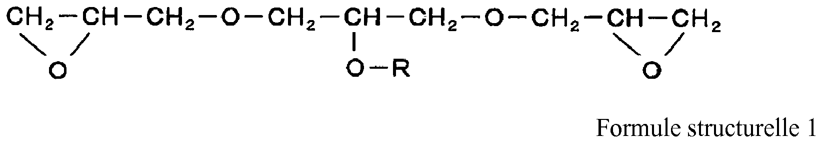 où R est un atome d'hydrogène ou un groupe représenté par la formule suivante: 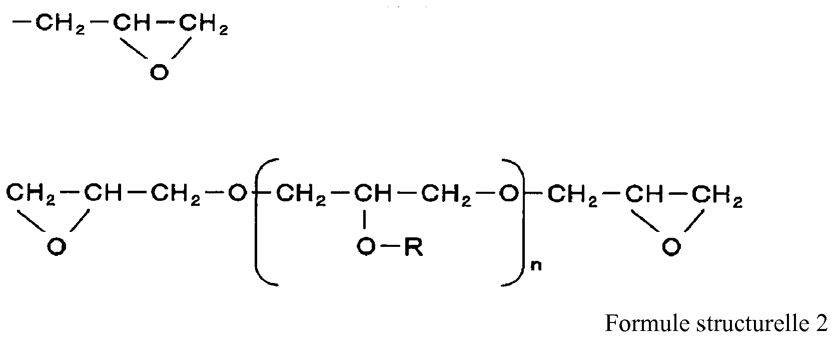 où R est un atome d'hydrogène ou un groupe représenté par la formule suivante;
et n est un nombre entier d'une valeur de 2 à 10, 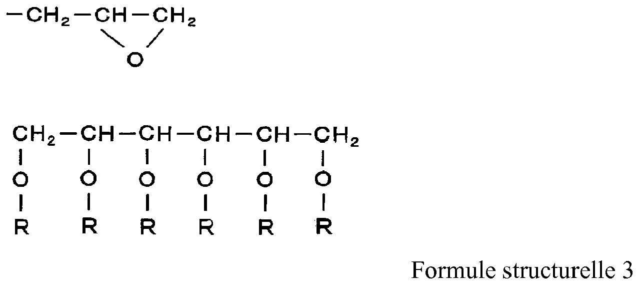 où R est un atome d'hydrogène ou un groupe représenté par la formule suivante, à condition que les R ne soient pas tous des atomes d'hydrogène; et n est un nombre entier d'une valeur de 2 à 10,

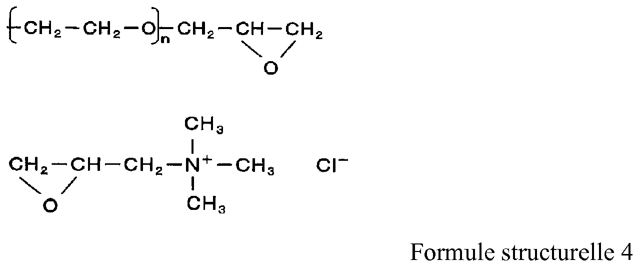

3. Jeu d'encre selon l'une quelconque des revendications 1 ou 2, dans lequel le liquide de traitement contient la résine époxy, et la résine époxy y est contenue en une quantité de 5 % en masse ou moins par rapport à la quantité totale du liquide de traitement.

4. Jeu d'encre selon l'une quelconque des revendications 1 à 3, dans lequel l'encre contient la résine époxy, et la résine époxy y est contenue en une quantité de 1 % en masse ou moins par rapport à la quantité totale de l'encre.

5. Jeu d'encre selon l'une quelconque des revendications 1 à 4, dans lequel l'acide organique est l'acide lactique ou son sel.

6. Jeu d'encre selon l'une quelconque des revendications 1 à 5, dans lequel le tensioactif est un tensioactif fluoré.

7. Jeu d'encre selon la revendication 6, dans lequel le tensioactif fluoré est un composé représenté par la formule structurelle suivante:
C₄F₉-CH₂CH(OH)CH₂O-(CH₂CH₂O)₂₃-CH₂CH(OH)CH₂-C₄F₉

8. Jeu d'encre selon l'une quelconque des revendications 1 à 7, dans lequel le liquide de traitement et l'encre contiennent en outre tous les deux un agent de démoussage.

9. Jeu d'encre selon la revendication 8, dans lequel l'agent de démoussage est la N-octyl-2-pyrrolidone,
le 2,4,7,9-tétraméthyldécane-4,7-diol, ou
le 2,5,8,11-tétraméthyldodécane-5,8-diol.

10. Jeu d'encre selon l'une quelconque des revendications 1 à 9, dans lequel le liquide de traitement contient en outre un polymère soluble dans l'eau contenant le groupe oxazoline dont une chaîne latérale contient un groupe oxazoline.

11. Cartouche, comprenant:
un boîtier; et
le jeu d'encre tel que défini selon l'une quelconque des revendications 1 à 10,
où le boîtier est chargé avec le liquide de traitement, et l'encre du jeu d'encre.

12. Procédé d'enregistrement par jet d'encre, comprenant:
l'application d'un liquide de traitement sur un milieu d'enregistrement; et
l'éjection d'une encre sur le milieu d'enregistrement, sur lequel le liquide de traitement a été appliqué, pour former une image,
où le liquide de traitement et l'encre sont le liquide de traitement et l'encre du jeu d'encre tels que définis selon l'une quelconque des revendications 1 à 10.

13. Procédé d'enregistrement par jet d'encre selon la revendication 12, comprenant en outre le chauffage.

14. Dispositif d'enregistrement par jet d'encre, comprenant:
le jeu d'encre tel que défini selon l'une quelconque des revendications 1 à 10;
une unité d'application de liquide de traitement (134-140) configurée pour appliquer le liquide de traitement du jeu d'encre sur un milieu d'enregistrement (114); et
une unité de formation d'image (107K, 107C, 107M, 107Y) configurée pour éjecter l'encre du jeu d'encre sur le milieu d'enregistrement (114), sur lequel le liquide de traitement a été appliqué, pour former une image.
